# EUROPEAN PATENT APPLICATION

(11) **EP 4 797 631 A1**
(43) Date of publication of application: **26.08.2026**
(21) Application number: 24910287.2
(22) Date of filing: 31.10.2024
(51) Int. Cl.: H04L 25/02

(54) **INFORMATION TRANSMISSION METHOD, APPARATUS, AND SYSTEM**

(30) Priority: 25.12.2023 CN 202311798747
(71) Applicant: HUAWEI TECHNOLOGIES CO., LTD., Shenzhen, Guangdong 518129 (CN)
(72) Inventor: HE, Hongli, Shenzhen, Guangdong 518129 (CN); LI, Xueru, Shenzhen, Guangdong 518129 (CN)
(74) Representative: Maiwald GmbH
(86) International application number: PCT/CN2024/128900
(87) International publication number: WO 2025/139349

(57) **Abstract**

This application relates to an information transmission method, an apparatus, and a system. A first apparatus receives a first reference signal from a second apparatus. The first apparatus sends first information. The first information is obtained by correcting a measurement result of the first reference signal based on a first phase. The first phase is a phase determined based on a first path and the measurement result of the first reference signal, or a phase determined based on a measurement result of a third reference signal. The first path is a path between the first apparatus and the second apparatus, and the third reference signal is a reference signal used for phase correction. The measurement result of the first reference signal is corrected based on the first phase, so that phase deviations caused by device factors in the measurement result of the first reference signal can be minimized as much as possible. In this way, the first information obtained through the correction contains dominantly environment information, and does not contain the phase deviations caused by the device factors. Therefore, the environment information determined based on the first information is accurate.

## Description

### CROSS-REFERENCE TO RELATED APPLICATIONS

This application claims priority to Chinese Patent Application No. 202311798747.1, filed with the China National Intellectual Property Administration on December 25, 2023 and entitled "INFORMATION TRANSMISSION METHOD, APPARATUS, AND SYSTEM", which is incorporated herein by reference in its entirety.

### TECHNICAL FIELD

This application relates to the field of communication technologies, and in particular, to an information transmission method, an apparatus, and a system.

### BACKGROUND

Wireless sensing is an important technology in the future. In wireless sensing, a sending device may send signals into ambient environment, and a receiving device may correspondingly receive signals reflected by the environment. The receiving and sending devices may determine related information of the ambient environment by comparing and analyzing correlation between the received signals and the sent signals. For example, bi-static (bi-static) sensing is an important sensing mode in wireless sensing. In bi-static sensing, the ambient environment may be typically sensed by having one device send signals and another device receive signals. Specifically, the receiving device measures the received signals to obtain a channel measurement result. The channel measurement result is closely related to the ambient environment. For example, positions of objects in the environment and movement (including linear motion or periodic vibration such as breathing and heartbeat) of the objects affect the channel measurement result. Therefore, the channel measurement result can reflect environment information.

However, the channel measurement result measured by the receiving device typically includes not only the environment information, but also impact of device factors. Specifically, the channel measurement result measured by the receiving device is typically an equivalent baseband measurement result. Therefore, when a radio frequency device of the device has some non-ideal factors, the baseband measurement result includes both the environment information and impact of the radio frequency device. For example, when carrier frequencies of the receiving and sending devices are inconsistent, the baseband measurement result may include phase deviations caused by carrier frequency deviations. For another example, when crystal oscillators of the receiving and sending devices are not ideal, the baseband measurement result may include additional phase noise and the like. It can be learned that, in addition to the environment information, the channel measurement result measured by the receiving device further includes interference information caused by the device factors. Therefore, the accuracy of the environment information determined based on the channel measurement result is low, or it is understood that the accuracy of a sensing result is low.

### SUMMARY

Embodiments of this application provide an information transmission method, an apparatus, and a system, to improve accuracy of a sensing result.

According to a first aspect, an information transmission method is provided. The method may be performed by a first apparatus. The first apparatus may implement one or more of sensing, positioning, or communication functions. The first apparatus is, for example, a terminal device, or another device including a function of the terminal device, or a chip system (or a chip) or another functional module. The chip system or the functional module can implement the function of the terminal device. The chip system or the functional module is, for example, disposed in the terminal device. Alternatively, the first apparatus is, for example, a network device, or another device including a function of the network device, or a chip system (or a chip) or another functional module. The chip system or the functional module can implement the function of the network device. The chip system or the functional module is, for example, disposed in the network device. Optionally, the network device is an access network device or a core network device. The method includes: receiving a first reference signal from a second apparatus; and sending first information, where the first information is obtained by correcting a measurement result of the first reference signal based on a first phase, the first phase is a phase determined based on a first path and the measurement result of the first reference signal, or the first phase is a phase determined based on a measurement result of a third reference signal, the first path is one of one or more paths between the first apparatus and the second apparatus, and the third reference signal is a reference signal used for phase correction.

In this embodiment of this application, the measurement result of the first reference signal may be corrected based on the first phase. The first phase may be a phase of the first path, or a phase determined based on the reference signal used for the phase correction. For example, the first phase can reflect phase deviations caused by device factors. The measurement result of the first reference signal is corrected based on the first phase, so that the phase deviation caused by the device factor in the measurement result of the first reference signal can be eliminated as much as possible. In this way, the first information obtained through the correction includes only environment information as far as possible, and does not include the phase deviation caused by the device factor. Therefore, the environment information determined based on the first information is accurate.

In an optional implementation, the first information includes one or more of the following: a first channel coefficient; phase information of the one or more paths; Doppler frequency information of the one or more paths; first Doppler spectrum information; or first auto correlation function information. Alternatively, the first information may further include other information. This is not limited herein. For example, the phase deviation caused by the device factor is removed from the first information, so that the environment information determined, based on the first information, by a device that receives the first information may be accurate.

In an optional implementation, the method further includes: determining, based on the measurement result of the first reference signal in a time subunit n, that an initial channel coefficient is ***H**ₙ* and the first phase is *θₙ*; and determining that the first channel coefficient is ***H**'ₙ* = ***H**ₙe*^{-*jθ*ₙ}. If the first information includes the first channel coefficient and does not include other information, and the first apparatus does not perform further processing (for example, processing such as compression) on the first channel coefficient, the first apparatus may directly send the first channel coefficient after determining the first channel coefficient, without needing to perform the step of determining the first information based on the first channel coefficient. In this embodiment of this application, the first apparatus may separately process each time unit or time subunit occupied by the first reference signal, so that a processing result can cover a time domain resource occupied by the first reference signal, and a granularity is fine.

In an optional implementation, the phase information of the one or more paths indicates: a phase of each of the one or more paths, or a phase difference between an initial phase of each of the one or more paths and the first phase. In other words, phase information of a path may directly indicate a phase of the path (in this case, the phase is a phase corrected based on the first phase), so that the indication is clear; or phase information of a path may indicate a phase difference between an initial phase of the path and the first phase, and bits required for indicating the phase difference are usually fewer than bits required for indicating the phase. Therefore, transmission overheads can be reduced.

In an optional implementation, the first phase is a phase determined based on the first path, where the first phase is a phase determined based on a channel coefficient measured after the first reference signal is received via the first path; the first phase is a phase determined based on a channel coefficient that is on a reference frequency unit and measured after the first reference signal is received via the first path; the first phase is a phase determined based on a channel coefficient measured after the first reference signal is received via the first path and via a reference antenna port and/or a first reference signal port; or the first phase is a phase determined based on a channel coefficient that is on a reference frequency unit and measured after the first reference signal is received via the first path and via a reference antenna port and/or a first reference signal port. The first phase may be associated with different parameters. The parameters include, for example, one or more of a reference subcarrier, the reference antenna port, or the first reference signal port. Alternatively, the first phase may be associated with another parameter. This is not limited herein.

In an optional implementation, the first path is a path with a smallest delay among the one or more paths. For example, the first path is a path that is earliest received. This manner of determining the first path is simple.

In an optional implementation, the first path is a LoS path between the first apparatus and the second apparatus. When a LoS path exists between the first apparatus and the second apparatus, and both the first apparatus and the second apparatus are in a static state, a phase of the LoS path remains unchanged. In addition, because signal strength of the LoS path is large, an extracted phase is more accurate. Therefore, a correction effect obtained when the LoS path is selected as the first path is good.

In an optional implementation, the method further includes: receiving first indication information, where the first indication information includes one or more of the following: first delay information, where the first delay information indicates a delay of the first path; an index of the first path; or first precoding vector information or first precoding matrix information, where the first precoding vector information or the first precoding matrix information corresponds to the first path. In this embodiment of this application, the first apparatus may determine the first path based on the measurement result of the first reference signal. Alternatively, the first apparatus may determine the first path based on the first indication information from another apparatus, without needing to determine the first path by itself. This can simplify implementation of the first apparatus. For example, if the first apparatus is an apparatus with a weak capability, the first path may be determined based on the first indication information, so that the solution in this embodiment of this application can cover more types of apparatuses.

In an optional implementation, before receiving the first indication information, the method further includes: receiving a second reference signal from the second apparatus; and sending a first measurement result, where the first measurement result is a measurement result of the second reference signal, and the first measurement result includes one or more of the following: at least one second channel coefficient; at least one first delay power spectrum; at least one first precoding matrix indicator PMI; or path information of N paths, where the N paths are all or a part of the paths between the first apparatus and the second apparatus, and N is a positive integer. For example, if the first apparatus needs to determine the first path based on the first indication information, the first apparatus may first measure the second reference signal, so that another apparatus may determine the first path based on the measurement result of the second reference signal, and then indicate the first path to the first apparatus. Alternatively, if another apparatus can determine the first path in another manner, the first apparatus may not need to measure the second reference signal.

In an optional implementation, the N paths include a second path, and path information of the second path includes one or more of the following: an index of the second path; an identifier of the second path; delay information corresponding to the second path; AoA information of the second path; AoD information of the second path; or LoS path information of the second path, where the LoS path information of the second path indicates whether the second path is a LoS path and/or indicates a probability that the second path is a LoS path. In addition to these parameters, path information of a path may further include another parameter, or may not include the foregoing parameters but include another parameter. This is not limited.

In an optional implementation, the method further includes: receiving the third reference signal from the second apparatus, where there is an intersection between time domain resources occupied by the first reference signal and the third reference signal. The first phase may be determined based on the measurement result of the third reference signal. For example, the third reference signal may be used for the phase correction. Additional phase deviations caused by device impact may be different in different time subunits. Therefore, if the first phase needs to be determined based on the third reference signal and the measurement result of the first reference signal needs to be corrected, the first reference signal resource and the third reference signal resource may be configured in a same time subunit, to improve accuracy of the first phase. Therefore, in this embodiment of this application, there may be an intersection between the time domain resource occupied by the first reference signal resource and the time domain resource occupied by the third reference signal resource.

In an optional implementation, the method further includes: receiving the third reference signal from the second apparatus, where the time domain resources occupied by the first reference signal and the third reference signal completely overlap. When the time domain resources occupied by the first reference signal and the third reference signal completely overlap, the obtained first phase may be more accurate.

In an optional implementation, a type-D quasi co-location QCL source of a resource for transmitting the first reference signal is different from a type-D quasi co-location QCL source of a resource for transmitting the third reference signal. Type-D quasi co-location is usually used to describe a case in which a receive end may use a same receive beam or similar receive beams to perform receiving on two reference signal resources (or two channels, or one reference signal resource and one channel). In this embodiment of this application, different transmit beams and/or different receive beams may be configured for the first reference signal resource and the third reference signal resource. Therefore, the type-D quasi co-location source of the first reference signal resource is different from the type-D QCL source of the third reference signal resource.

In an optional implementation, the method further includes: receiving second indication information, where the second indication information indicates that the resource for transmitting the first reference signal is associated with the resource for transmitting the third reference signal, or indicates that the first information is obtained by performing phase correction based on the measurement result of the third reference signal.

In an optional implementation, that the resource for transmitting the first reference signal is associated with the resource for transmitting the third reference signal includes: the first information is obtained by performing phase correction based on the measurement result of the third reference signal, or it may be understood that the measurement result of the third reference signal is used to perform phase correction on the measurement result of the first reference signal.

If the first apparatus determines that the first reference signal resource is associated with the second reference signal resource, the first apparatus may perform phase correction on the measurement result of the first reference signal based on the measurement result of the third reference signal, for example, perform phase correction on the measurement result of the first reference signal based on the first phase. Alternatively, the second indication information may not indicate that the first reference signal resource is associated with the third reference signal resource, but directly indicate to perform phase correction on the measurement result of the first reference signal based on the measurement result of the third reference signal.

In an optional implementation, the method further includes: receiving third indication information, where the third indication information indicates one or more of the following: a transmit beam associated with the first reference signal resource; a receive beam associated with the first reference signal resource; a transmit beam associated with the third reference signal resource; or a receive beam associated with the third reference signal resource. The first apparatus may receive and send the first reference signal and/or the third reference signal based on the beams indicated by the third indication information.

In an optional implementation, the first phase is the phase determined based on the measurement result of the third reference signal, where the first phase is a phase determined based on a channel coefficient measured after the third reference signal is received; the first phase is a phase determined based on a channel coefficient that is on a reference frequency unit and measured after the third reference signal is received; the first phase is a phase determined based on a channel coefficient measured after the third reference signal is received via a reference antenna port and/or a first reference signal port; or the first phase is a phase determined based on a channel coefficient that is on a reference frequency unit and measured after the third reference signal is received via a reference antenna port and/or a first reference signal port.

According to a second aspect, another information transmission method is provided. The method may be performed by a third apparatus. The third apparatus may implement one or more of sensing, positioning, or communication functions. The third apparatus is, for example, a terminal device, or another device including a function of the terminal device, or a chip system (or a chip) or another functional module. The chip system or the functional module can implement the function of the terminal device. The chip system or the functional module is, for example, disposed in the terminal device. Alternatively, the third apparatus is, for example, a network device, or another device including a function of the network device, or a chip system (or a chip) or another functional module. The chip system or the functional module can implement the function of the network device. The chip system or the functional module is, for example, disposed in the network device. Optionally, the network device is an access network device or a core network device. The third apparatus is, for example, a second apparatus, or another apparatus other than a first apparatus and the second apparatus. The second apparatus is an apparatus that sends a reference signal to the first apparatus. The method includes: sending first request information to a first apparatus, where the first request information indicates the first apparatus to receive and measure a first reference signal, and indicates the second apparatus to report first information, where the first information is obtained by correcting a measurement result of the first reference signal based on a first phase, the first phase is a phase determined based on a first path and the measurement result of the first reference signal, or the first phase is a phase determined based on a measurement result of a third reference signal, the first path is one of one or more paths between the first apparatus and the second apparatus, and the third reference signal is a reference signal used for phase correction.

In an optional implementation, the first information includes one or more of the following: a first channel coefficient; phase information of the one or more paths; Doppler frequency information of the one or more paths; first Doppler spectrum information; or first auto correlation function information.

In an optional implementation, the first path is a path with a smallest delay among the one or more paths.

In an optional implementation, the first path is a LoS path between the first apparatus and the second apparatus.

In an optional implementation, the method further includes: sending first indication information to the first apparatus, where the first indication information includes one or more of the following: first delay information, where the first delay information indicates a delay of the first path; an index of the first path; or first precoding vector information or first precoding matrix information, where the first precoding vector information or the first precoding matrix information corresponds to the first path.

In an optional implementation, the method further includes: sending a second reference signal to the first apparatus; and receiving a first measurement result from the first apparatus, where the first measurement result is a measurement result of the second reference signal, and the first measurement result includes one or more of the following: at least one second channel coefficient; at least one first delay power spectrum; at least one first PMI; or path information of N paths, where the N paths are all or a part of the paths between the first apparatus and the second apparatus, and N is a positive integer.

In an optional implementation, the N paths include a second path, and path information of the second path includes one or more of the following: an index of the second path; an identifier of the second path; delay information corresponding to the second path; AoA information of the second path; AoD information of the second path; or LoS path information of the second path, where the LoS path information of the second path indicates whether the second path is a LoS path and/or indicates a probability that the second path is a LoS path.

In an optional implementation, there is an intersection between time domain resources occupied by the first reference signal and the third reference signal.

In an optional implementation, the time domain resources occupied by the first reference signal and the third reference signal completely overlap.

In an optional implementation, a type-D quasi co-location source of a resource for transmitting the first reference signal is different from a type-D quasi co-location source of a resource for transmitting the third reference signal.

In an optional implementation, the method further includes: sending second indication information to the first apparatus, where the second indication information indicates that the resource for transmitting the first reference signal is associated with the resource for transmitting the third reference signal, or indicates that the first information is obtained by performing phase correction based on the measurement result of the third reference signal.

In an optional implementation, that the resource for transmitting the first reference signal is associated with the resource for transmitting the third reference signal includes: the first information is obtained by performing phase correction based on the measurement result of the third reference signal, or it may be understood that the measurement result of the third reference signal is used to perform phase correction on the measurement result of the first reference signal.

In an optional implementation, the method further includes: sending third indication information to the first apparatus, where the third indication information indicates one or more of the following: a transmit beam associated with the first reference signal resource; a receive beam associated with the first reference signal resource; a transmit beam associated with the third reference signal resource; or a receive beam associated with the third reference signal resource.

In an optional implementation, the method further includes: sending third request information to the second apparatus, where the third request information indicates the second apparatus to send the first reference signal.

In an optional implementation, the third request information further indicates the second apparatus to send the third reference signal.

For technical effects brought by the second aspect or the optional implementations, refer to the descriptions of the technical effects of the first aspect or the corresponding implementations.

According to a third aspect, an apparatus is provided. The apparatus may be the first apparatus according to either of the first aspect and the second aspect. The apparatus has a function of the foregoing first apparatus. The apparatus is, for example, a terminal device, or another device including a function of the terminal device, or a chip system (or a chip) or another functional module. The chip system or the functional module can implement the function of the terminal device. The chip system or the functional module is, for example, disposed in the terminal device. Alternatively, the apparatus is, for example, a network device, or another device including a function of the network device, or a chip system (or a chip) or another functional module. The chip system or the functional module can implement the function of the network device. The chip system or the functional module is, for example, disposed in the network device. In an optional implementation, the apparatus includes a baseband apparatus and a radio frequency apparatus. In another optional implementation, the apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive a first reference signal from a second apparatus; and the transceiver unit (or the sending unit) is configured to send first information, where the first information is obtained by correcting a measurement result of the first reference signal based on a first phase, the first phase is a phase determined based on a first path and the measurement result of the first reference signal, or the first phase is a phase determined based on a measurement result of a third reference signal, the first path is one of one or more paths between the first apparatus and the second apparatus, and the third reference signal is a reference signal used for phase correction.

In an optional implementation, the apparatus further includes a storage unit (sometimes also referred to as a storage module). The processing unit is configured to: be coupled to the storage unit, and execute a program or instructions in the storage unit, to cause the apparatus to perform a function of the first apparatus according to either of the first aspect and the second aspect.

According to a fourth aspect, an apparatus is provided. The apparatus may be the third apparatus according to either of the first aspect and the second aspect. The apparatus has a function of the foregoing third apparatus. The apparatus is, for example, a terminal device, or another device including a function of the terminal device, or a chip system (or a chip) or another functional module. The chip system or the functional module can implement the function of the terminal device. The chip system or the functional module is, for example, disposed in the terminal device. Alternatively, the apparatus is, for example, a network device, or another device including a function of the network device, or a chip system (or a chip) or another functional module. The chip system or the functional module can implement the function of the network device. The chip system or the functional module is, for example, disposed in the network device. In an optional implementation, the apparatus includes a baseband apparatus and a radio frequency apparatus. In another optional implementation, the apparatus includes a processing unit (sometimes also referred to as a processing module) and a transceiver unit (sometimes also referred to as a transceiver module). For an implementation of the transceiver unit, refer to the descriptions in the third aspect.

In an optional implementation, the transceiver unit (or the sending unit) is configured to send first request information to a first apparatus, where the first request information indicates the first apparatus to receive and measure a first reference signal, and indicates a second apparatus to report first information, where the first information is obtained by correcting a measurement result of the first reference signal based on a first phase, the first phase is a phase determined based on a first path and the measurement result of the first reference signal, or the first phase is a phase determined based on a measurement result of a third reference signal, the first path is one of one or more paths between the first apparatus and the second apparatus, and the third reference signal is a reference signal used for phase correction.

In an optional implementation, the apparatus further includes a storage unit (sometimes also referred to as a storage module). The processing unit is configured to: be coupled to the storage unit, and execute a program or instructions in the storage unit, to cause the apparatus to perform a function of the third apparatus according to either of the first aspect and the second aspect.

According to a fifth aspect, an apparatus is provided. The apparatus may be a terminal device, or may be a chip or a chip system used in the terminal device. Alternatively, the apparatus may be a network device, or may be a chip or a chip system used in the network device. The apparatus includes a communication interface and a processor, and optionally, further includes a memory. The memory is configured to store a computer program. The processor is coupled to the memory and the communication interface. When the processor reads the computer program or instructions, the apparatus is caused to perform the method performed by the first apparatus according to the foregoing aspects.

According to a sixth aspect, an apparatus is provided. The apparatus may be a network device, or may be a chip or a chip system used in the network device. Alternatively, the apparatus may be a terminal device, or may be a chip or a chip system used in the terminal device. The apparatus includes a communication interface and a processor, and optionally, further includes a memory. The memory is configured to store a computer program. The processor is coupled to the memory and the communication interface. When the processor reads the computer program or instructions, the apparatus is caused to perform the method performed by the third apparatus according to the foregoing aspects.

According to a seventh aspect, a system is provided. The system includes a first apparatus and a third apparatus. The first apparatus is configured to perform the method performed by the first apparatus according to the first aspect or the second aspect, and the third apparatus is configured to perform the method performed by the third apparatus according to the first aspect or the second aspect. For example, the first apparatus may be implemented by using the apparatus according to the third aspect or the fifth aspect, and the third apparatus may be implemented by using the apparatus according to the fourth aspect or the sixth aspect. Optionally, the system may further include another apparatus or device. For example, when the third apparatus is not a second apparatus, the system may further include the second apparatus. This is not limited herein.

According to an eighth aspect, a computer-readable storage medium is provided. The computer-readable storage medium is configured to store a computer program or instructions; and when the computer program or the instructions are run, the method performed by the first apparatus and/or the third apparatus according to the foregoing aspects is implemented.

According to a ninth aspect, a computer program product including instructions is provided. When a computer program or instructions are run on a computer, the methods according to the foregoing aspects are implemented.

According to a tenth aspect, a chip system is provided. The system includes a processor and an interface. The processor is configured to invoke instructions from the interface and run the instructions, to cause the chip system to implement the methods according to the foregoing aspects.

### BRIEF DESCRIPTION OF DRAWINGS

FIG. 1 is a diagram of an application scenario according to an embodiment of this application;
FIG. 2 is a flowchart of an information transmission method according to an embodiment of this application;
FIG. 3 is a diagram of distribution of a first reference signal resource in one slot according to an embodiment of this application;
FIG. 4 is a diagram of periodic distribution of a first reference signal resource according to an embodiment of this application;
FIG. 5 is a diagram of obtaining a first channel coefficient according to an embodiment of this application;
FIG. 6 is a flowchart of another information transmission method according to an embodiment of this application;
FIG. 7 is a diagram of sending a first reference signal and a third reference signal by a second apparatus according to an embodiment of this application;
FIG. 8 is a flowchart of still another information transmission method according to an embodiment of this application;
FIG. 9 is a diagram of an apparatus according to an embodiment of this application; and
FIG. 10 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns indicates "a singular noun or a plural noun", namely, "one or more". "At least one" means one or more, and "a plurality of" means two or more. "And/or" describes an association relationship among associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, a sequence, a time sequence, priorities, importance, or the like of the plurality of objects. In addition, step numbers in embodiments described in this application are merely intended to distinguish between different steps, but are not intended to limit a sequence of the steps. For example, S201 may be performed before S202, may be performed after S202, or may be performed simultaneously with S202.

Some terms or concepts in embodiments of this application are described below, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device in embodiments of this application can implement one or more of functions such as sensing, positioning, or communication. The terminal device is configured to connect a person, an object, a machine, and the like, may be widely used in various scenarios, and includes, for example, but not limited to terminal devices in the following scenarios: a sensing scenario, a positioning scenario, cellular communication, device-to-device (device-to-device, D2D) communication, vehicle to everything (vehicle to everything, V2X), machine-to-machine/machine-type communications (machine-to-machine/machine-type communications, M2M/MTC), internet of things (internet of things, IoT), virtual reality (virtual reality, VR), augmented reality (augmented reality, AR), industrial control (industrial control), self driving (self driving), remote medical (remote medical), smart grid (smart grid), smart furniture, smart office, smart wearable, smart transportation, smart city (smart city), drones, robots, and indoor commercial scenarios (such as mobile phone projection, file sharing, and video transmission from mobile phones to VR glasses). When the terminal device is used in V2X, the terminal device may also be referred to as a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side apparatus (road side unit, RSU). Alternatively, the terminal device may be a device in D2D communication, for example, an electricity meter or a water meter.

In addition, in embodiments of this application, the terminal device may alternatively be a terminal device in an IoT system. IoT is an important part of future development of information technologies. A main technical feature of IoT is connecting things to networks by using communication technologies, to implement an intelligent network for interconnection between persons and machines or between things.

If various terminal devices described above are located in a vehicle (for example, placed in the vehicle or mounted in the vehicle), the terminal devices may be all considered as vehicle-mounted terminal devices. For example, the vehicle-mounted terminal device is also referred to as an on-board unit (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement a method in this application by using the vehicle-mounted module, the vehicle-mounted assembly, the vehicle-mounted component, the vehicle-mounted chip, or the vehicle-mounted unit that is built in the vehicle.

The terminal device may be sometimes referred to as user equipment (user equipment, UE), a terminal, an access station, a UE station, a remote station, a wireless communication device, a user apparatus, or the like.

In embodiments of this application, an apparatus configured to implement a function of the terminal device may be a terminal device; or may be an apparatus, for example, a chip system, that can support a terminal device in implementing the function. The apparatus may be mounted in the terminal device. In the technical solutions provided in embodiments of this application, the technical solutions provided in embodiments of this application are described by using an example in which the apparatus configured to implement the function of the terminal device is a terminal device. In addition, for ease of description, an example in which the terminal device is UE is used for description in embodiments of this application.

A network device in embodiments of this application includes, for example, an access network device and/or a core network device. The network device in embodiments of this application can implement one or more of functions such as sensing, positioning, or communication. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (centralized unit, CU), and/or a distributed unit (distributed unit, DU) in a cloud radio access network (cloud radio access network, CRAN) scenario. Alternatively, the access network device may be a server or the like. For example, a network device in a V2X technology may be a road side unit (road side unit, RSU). An example in which the access network device is a base station is used below for description. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems using different access technologies may be different. This is not limited in embodiments of this application. A 5th generation mobile communication technology (5th generation, 5G) system is used as an example. The core network device includes an access and mobility management function (access and mobility management function, AMF), a session management function (session management function, SMF), a policy control function (policy control function, PCF), a user plane function (user plane function, UPF), a function used for sensing (for example, referred to as a sensing function (sensing function, SF)), or a function used for positioning (for example, a location management function (location management function, LMF)).

In embodiments of this application, an apparatus configured to implement functions of the network device may be a network device; or may be an apparatus, for example, a chip system, that can support a network device in implementing the functions. The apparatus may be mounted in the network device. In the technical solutions provided in embodiments of this application, the technical solutions provided in embodiments of this application are described by using an example in which the apparatus configured to implement the functions of the network device is a network device.

The following describes technical features in embodiments of this application.

Wireless sensing is an important technology in the future. In wireless sensing, a sending device may send signals into ambient environment, and a receiving device may correspondingly receive signals reflected by the environment. The receiving and sending devices may determine related information of the ambient environment by comparing and analyzing correlation between the received signals and the sent signals, for example, determine whether to-be-detected or to-be-sensed target objects exist in the environment, distances between scatterers and the receiving and sending devices, orientations or angles (including horizontal directions or vertical directions) of the scatterers relative to the receiving and sending devices, moving speeds of the scatterers relative to the receiving and sending devices, and other information. For example, in V2X scenarios, vehicles may obtain, through wireless sensing, ambient environment information, including positions and speed information of moving objects such as vehicles and pedestrians, and information about relatively static objects such as road surfaces and fences. For another example, in scenarios like airports, a sensing device may be deployed to monitor an uncrewed aerial vehicle, to prevent security impact on take-off and landing of a passenger aircraft in the airport. For another example, in a home environment, an intruder may be detected through wireless sensing, to improve security and privacy of the home environment.

Bi-static sensing is an important sensing mode in wireless sensing. In bi-static sensing, usually, ambient environment may be sensed by having one device to send signals and another device to receive signals. Specifically, the receiving device measures the received signals to obtain a channel measurement result. The channel measurement result is closely related to the ambient environment. For example, positions of objects in the environment and movement (including linear motion or periodic vibration such as breathing and heartbeat) of the objects affect the channel measurement result. The channel measurement result obtained by the receiving device includes both amplitude information and phase information, and their combination reflects environment information to be sensed.

However, the channel measurement result measured by the receiving device typically includes not only the environment information, but also impact of device factors. Specifically, the channel measurement result measured by the receiving device is typically an equivalent baseband measurement result. Therefore, when a radio frequency device of the device has some non-ideal factors, the baseband measurement result includes both the environment information and impact of the radio frequency device. For example, when carrier frequencies of the receiving and sending devices are inconsistent, the baseband measurement result may include phase deviations caused by carrier frequency deviations. For another example, when crystal oscillators of the receiving and sending devices are not ideal, the baseband measurement result may include additional phase noise and the like. It can be learned that, in addition to the environment information, the channel measurement result measured by the receiving device further includes interference information caused by the device factors. Therefore, the accuracy of the environment information determined based on the channel measurement result is low, or it is understood that the accuracy of a sensing result is low.

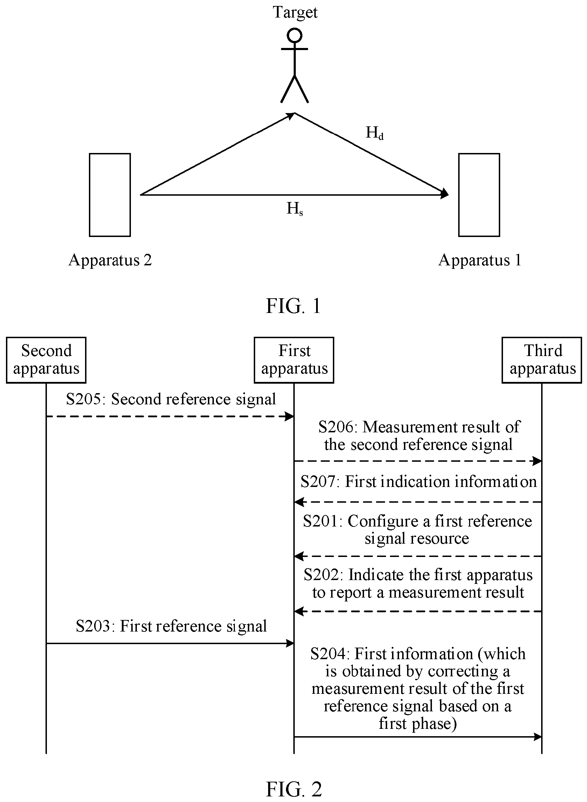

For example, refer to FIG. 1. An apparatus 2 sends a reference signal to an apparatus 1, and the apparatus 1 measures the reference signal, to obtain a channel measurement result. For example, the channel measurement result is represented by a channel coefficient, and the channel coefficient includes two parts. A first part is environment information (*Hₛ* + *H_{d}*), which is a sensing result to be obtained, where *Hₛ* is a channel coefficient corresponding to a line of sight (line of sight, LoS) path between the two apparatuses, and *H_{d}* is a channel coefficient corresponding to paths that are reflected by a target (for example, a person in FIG. 1) between the two apparatuses. When the two apparatuses are stationary, *Hₛ* is usually of a constant value. When the sensing target is in a non-static state, for example, the person moves, a limb of the person moves, the person breathes, the person's heart beats, or the person speaks, *H_{d}* changes. The change of *H_{d}* includes an amplitude change and/or a phase change. When a straight-line movement distance of the target is small, the change of *H_{d}* is mainly reflected in a phase change. According to some algorithms, based on a change of *H_{d}*, information about the target may be deduced, for example, a moving speed, a movement mode, a breathing frequency, a heartbeat frequency, and even language content of the target are determined. However, due to the foregoing device impact factors, an actual channel coefficient measured by the apparatus 1 is (*Hₛ* + *H_{d}*)*e^{jθ}*, where *θ* is an additional phase caused by device factors such as phase noise or a carrier frequency deviation, and j is an imaginary unit, and may be represented as $\sqrt{- 1}$. Usually, existence of the carrier frequency deviation introduces an additional phase deviation that varies with time, and the phase noise may also change with time. Therefore, the overall *e^{jθ}* changes dynamically with time. Due to existence of *e^{jθ}*, accuracy of a sensing result is reduced.

In a 5G communication scenario, phase deviations caused by the device factor also causes a time fluctuation of an equivalent baseband channel for communication. Therefore, in a 5G system, when sending a signal, a transmit end may add a phase tracking reference signal (phase tracking reference signal, PTRS) to the sent signal. Because a phase change caused by phase noise and a carrier frequency deviation changes slightly in frequency domain, and changes greatly in time domain, PTRSs are sparse in frequency domain, and are dense in time domain, and are usually distributed on each orthogonal frequency division multiplexing (orthogonal frequency division multiplexing, OFDM) symbol (symbol). A receive end of the signal may track a phase change of the signal on each OFDM symbol by receiving the PTRS, to restore the signal sent by the transmit end.

However, although the receive end may track the phase change of the signal on each OFDM symbol by using the PTRS, the phase change includes both phase deviations caused by device factors and phase deviations caused by environment factors. In other words, because an objective in the communication scenario is to restore the signal sent by the signal transmit end, both the phase deviations caused by the device factors and the phase caused by the environment factors may be eliminated by using the PTRS, to determine the signal originally sent by the signal transmit end. However, in a sensing scenario, a phase caused by an environment information factor needs to be extracted, to sense environment information based on the phase. As a result, even if the PTRS is used in the sensing scenario, phase deviations caused by device factors cannot be eliminated only, and phase information related to the environment factor cannot be independently extracted. Alternatively, it is understood that an elimination result of the PTRS is a comprehensive reflection of the phase deviation caused by the device factor and the phase caused by the environment factor, but cannot independently reflect the phase caused by the environment information factor. Consequently, the environment information cannot be determined based on the elimination result.

In view of this, in embodiments of this application, a measurement result of a first reference signal may be corrected based on a first phase. The first phase may be a phase of a first path, or a phase determined based on a reference signal used for phase correction. For example, the first phase can reflect phase deviations caused by device factors. The measurement result of the first reference signal is corrected based on the first phase, so that the phase deviation caused by the device factor in the measurement result of the first reference signal can be eliminated as much as possible. In this way, first information obtained through the correction includes only environment information as far as possible, and does not include the phase deviation caused by the device factor. Therefore, the environment information determined based on the first information is accurate.

For application scenarios of embodiments of this application, still refer to FIG. 1. In FIG. 1, a bi-static sensing scenario is used as an example. The scenario may also be understood as a "self-sending and other-receiving" scenario. "Self-sending and other-receiving" refers to an operating mode in which one apparatus serves as a signal transmit end and the other apparatus serves as a signal receive end. For example, in FIG. 1, the apparatus 2 may send a signal, and another apparatus (for example, the apparatus 1 in FIG. 1) may receive a signal reflected after the signal reaches the target. The apparatus 1 may measure the received signal, and can determine environment information based on a measurement result. In embodiments of this application, the apparatus 1 may correct the measurement result based on a first phase. The content is described below. In FIG. 1, an example in which the target is a person is used. This is not limited in practice.

The scenario shown in FIG. 1 is merely an example, and embodiments of this application may be further applied to another sensing scenario. For example, embodiments of this application may be further applied to a "self-sending and self-receiving" scenario. "Self-sending and self-receiving" is an operating mode in which one apparatus serves as both a signal transmit end and a signal receive end. For example, one apparatus may send a signal, and may also receive a signal reflected after the signal reaches a target. The apparatus may measure the received signal, and can determine environment information based on a measurement result. In this scenario, a first apparatus and a second apparatus in embodiments of this application may be a same apparatus.

The first apparatus can implement one or more of functions such as sensing, positioning, or communication. The first apparatus is, for example, a terminal device or a functional module disposed in the terminal device, for example, a chip system or a module in the chip system. Alternatively, the first apparatus is, for example, a network device or a functional module disposed in the network device, for example, a chip system or a module in the chip system. The second apparatus can implement one or more of functions such as sensing, positioning, or communication. The second apparatus is, for example, a terminal device or a functional module disposed in the terminal device, for example, a chip system or a module in the chip system. Alternatively, the second apparatus is, for example, a network device or a functional module disposed in the network device, for example, a chip system or a module in the chip system. The first apparatus and the second apparatus may be apparatuses of a same type, for example, both are terminal devices. Alternatively, the first apparatus and the second apparatus may be apparatuses of different types. For example, the first apparatus is a terminal device, and the second apparatus is a network device. This is not limited in embodiments of this application.

The following describes the method provided in embodiments of this application with reference to the accompanying drawings. In embodiments of this application, "correction" may also be referred to as "calibration", "adjustment", "modification", or the like. The name is not limited. For example, "correcting B based on A" may be understood as changing B based on A, or changing a value of B based on A. In embodiments of this application, a time unit is, for example, a frame (frame), and a time subunit is, for example, a subframe (subframe), a slot (slot), a mini-slot (mini-slot), an OFDM symbol group, or an OFDM symbol; a time unit is, for example, a subframe, and a time subunit is, for example, a slot, a mini-slot, an OFDM symbol group, or an OFDM symbol; a time unit is, for example, a slot, and a time subunit is, for example, a mini-slot, an OFDM symbol group, or an OFDM symbol; a time unit is, for example, a mini-slot, and a time subunit is, for example, an OFDM symbol group or an OFDM symbol; a time unit is, for example, an OFDM symbol group, and a time subunit is, for example, an OFDM symbol; or a time unit is an OFDM symbol. In embodiments of this application, a frequency unit is, for example, a subcarrier, or may be another unit in frequency domain. In this specification, a subcarrier is mainly used as an example for description. In the following descriptions, the "subcarrier" may be replaced with a "frequency unit", and a "reference subcarrier" may be replaced with a "reference frequency unit". In embodiments of this application, an antenna, an antenna port, an antenna unit, an antenna element, and the like may be understood as same concepts, and may be replaced with each other.

Embodiments of this specification may be applied to a network architecture shown in FIG. 1. For example, the first apparatus described in embodiments of this specification may be the apparatus 1 in FIG. 1, and the second apparatus described in embodiments of this specification may be the apparatus 2 in FIG. 1. A third apparatus described in embodiments of this specification is, for example, the second apparatus, or may be a third-party apparatus that is not shown in FIG. 1. In the accompanying drawings corresponding to embodiments of this application, all steps represented by dashed lines are optional steps.

An embodiment of this application provides an information transmission method. FIG. 2 is a flowchart of the method.

S201: A third apparatus configures a first reference signal resource for a first apparatus. For example, the third apparatus may send first configuration information to the first apparatus, where the first configuration information is used to configure the first reference signal resource. The first reference signal resource may be used to send and/or receive a first reference signal. Usually, there is an association relationship between a reference signal resource and a reference signal. Therefore, configuration information of the reference signal resource may also be understood as configuration information of the reference signal. In embodiments of this application, in some cases, the two concepts of reference signal resource and reference signal may be replaced with each other. For example, "associated with an xx reference signal resource" may also be understood as "associated with an xx reference signal".

The third apparatus is, for example, a second apparatus (an apparatus for subsequently sending the first reference signal), or a third-party apparatus other than the first apparatus and the second apparatus. For example, the third-party apparatus is an access network apparatus; or a network element, a function, or a server that is responsible for a sensing function in a core network; or may be an application server configured to process a sensing service.

If the third apparatus and the second apparatus are different apparatuses, optionally, the third apparatus may further configure the first reference signal resource for the second apparatus. A configuration manner is similar to a manner in which the third apparatus configures the first reference signal resource for the first apparatus.

Optionally, the first configuration information may further indicate the first apparatus to receive and measure the first reference signal. For example, the first configuration information may include first request information, and the first request information indicates the first apparatus to receive and measure the first reference signal. Specifically, the first reference signal may be received on the first reference signal resource. Alternatively, if the first reference signal resource is configured in the first configuration information, it may be considered that the first apparatus is implicitly indicated to receive and measure the first reference signal. Therefore, the first configuration information indicates, without using additional information, the first apparatus to receive and measure the first reference signal.

If the third apparatus further configures the first reference signal resource for the second apparatus, the third apparatus may also indicate the second apparatus to send the first reference signal. For example, the third apparatus configures the first reference signal resource for the second apparatus by sending second configuration information to the second apparatus. For example, the second configuration information may include third request information, and the third request information indicates the second apparatus to send the first reference signal. Specifically, the first reference signal may be sent on the first reference signal resource. Alternatively, if the first reference signal resource is configured in the second configuration information, it may be considered that the second apparatus is implicitly indicated to send the first reference signal. Therefore, the second configuration information indicates, without using additional information, the second apparatus to send the first reference signal.

The first reference signal resource may be an aperiodic resource, or may be a periodic resource. In an OFDM system, when the first reference signal resource is a periodic resource, the first reference signal resource may present a periodic pattern (pattern) in time domain. In addition, the first reference signal resource may be a broadband signal in frequency domain. For example, the first reference signal resource may be distributed in frequency domain in a comb (comb) manner. In a single period, the first reference signal resource may occupy one or more time subunits. When a plurality of time subunits are occupied, the first reference signal resource may correspond to a same comb offset (offset) or different comb offsets in different time subunits.

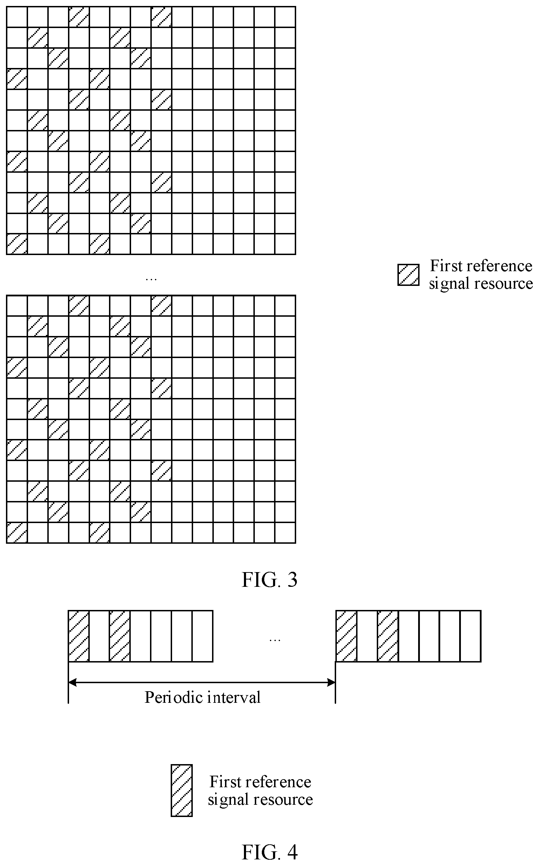

For example, FIG. 3 shows a structure of the first reference signal resource in one slot. In FIG. 3, an example in which a time unit is a slot, a time subunit is an OFDM symbol, and one slot includes 14 OFDM symbols is used. One grid in FIG. 3 represents one resource element (resource element, RE), and a shadow grid in FIG. 3 represents a position of the first reference signal resource. It can be learned from FIG. 3 that a comb of the first reference signal resource in frequency domain is 4, in other words, the first reference signal resource occupies one subcarrier at an interval of four subcarriers in frequency domain. In addition, the first reference signal resource corresponds to different comb offsets on different OFDM symbols. For example, for OFDM symbols 0 to 3, comb offsets of the first reference signal resource are respectively {0, 2, 1, 3}. Optionally, in one slot, the first reference signal resource may be repeated on different OFDM symbols. For example, in FIG. 3, a distribution manner of the first reference signal resource on the OFDM symbols 0 to 3 is the same as a distribution manner of the first reference signal resource on OFDM symbols 4 to 7. This is equivalent to that the first reference signal resource is repeated twice in the slot.

Optionally, in a single period, the first reference signal resource may alternatively be repeated in different time units. For example, refer to FIG. 4. One grid represents one time unit. In FIG. 4, an example in which the time unit is a slot is used. A shadow grid in FIG. 4 represents a position of the first reference signal resource, and distribution manners of the first reference signal resource in shadow grids in one period may be the same or may be different (for example, the first reference signal resource is circular based on a specific time domain offset and/or a frequency domain offset). For a distribution manner of the first reference signal resource in one slot, refer to FIG. 3, or there may be another distribution manner. It can be learned that the first reference signal resource is repeated twice in a unit of a slot in a single period, and a repetition interval is two slots. In addition, repetition manners of the first reference signal resource in periods are similar.

When the first reference signal resource is an aperiodic resource, it may be understood that the first reference signal resource exists for only one period. A distribution manner of the first reference signal resource in the period is similar to the foregoing manner. Details are not described again.

It can be learned from the foregoing descriptions that the first reference signal resource may be a periodic resource, in other words, the first reference signal resource may be periodically repeated. Optionally, resources included in the first reference signal resource in different periods may be configured as different reference signal resources, in other words, the first reference signal resource may include a plurality of reference signal resources, and each reference signal resource corresponds to one period. For example, in FIG. 4, a resource of the first reference signal resource in a 1^{st} period may be configured as a reference signal resource A, and a resource of the first reference signal resource in the 1^{st} period may be configured as a reference signal resource B. Alternatively, resources included in the first reference signal resource in all periods may be configured as a same reference signal resource. For example, in FIG. 4, resources of the first reference signal resource in a 1^{st} period and a 2^{nd} period (optionally, more subsequent periods may further be included) may be configured as a reference signal resource A.

In one period, the first reference signal resource may be repeated between time units (for example, FIG. 4). Optionally, different repeated time units included in the first reference signal resource may be configured as different reference signal resources. For example, in FIG. 4, a resource in a 1^{st} repeated slot in a 1^{st} period may be configured as a reference signal resource C, a resource in a 2^{nd} repeated slot in the 1^{st} period may be configured as a reference signal resource D, a resource in a 1^{st} repeated slot in a 2^{nd} period may be configured as a reference signal resource E, and a resource in a 2^{nd} repeated slot in the 2^{nd} period may be configured as a reference signal resource F. Alternatively, all resources included in the first reference signal in one period may be configured as a same reference signal resource. For example, in FIG. 4, a resource in a 1^{st} repeated slot and a resource in a 2^{nd} repeated slot in a 1^{st} period may be configured as a reference signal resource C, and a resource in a 1^{st} repeated slot and a resource in a 2^{nd} repeated slot in a 2^{nd} period may be configured as a reference signal resource D.

In addition, the first reference signal resource may alternatively be repeated in a time unit (for example, FIG. 3). Optionally, different repeated resources included in the first reference signal resource in one time unit may be configured as different reference signal resources. For example, in FIG. 3, resources of the OFDM symbols 0 to 3 may be configured as a reference signal resource G, and resources of the OFDM symbols 4 to 7 may be configured as a reference signal resource H. Alternatively, resources of the first reference signal resource in one slot may be configured as one reference signal resource. For example, in FIG. 3, resources of the OFDM symbols 0 to 3 and resources of the OFDM symbols 4 to 7 may be configured as a reference signal resource G.

When the first reference signal resource is an aperiodic resource, a similar configuration manner may also be used. Details are not described herein again.

Based on the foregoing descriptions, the first reference signal resource may alternatively include a plurality of reference signal resources. For a distribution manner, a configuration method, and the like of each reference signal resource in time domain and/or frequency domain, refer to the foregoing related descriptions of the first reference signal resource.

Alternatively, the first reference signal resource may be pre-configured in the first apparatus, or predefined in a protocol. In this case, S201 may not need to be performed. Therefore, S201 is an optional step.

S202: The third apparatus indicates the first apparatus to report a measurement result. For example, the third apparatus sends second request information to the first apparatus, where the second request information may indicate to report the measurement result.

The second request information is, for example, included in the first configuration information, in other words, the second request information and the first request information may be included in the same information; or the second request information may not be included in the first configuration information, but is separately sent.

Optionally, the second request information may indicate a parameter that needs to be reported. In this case, the first apparatus may report the parameter configured based on the second request information. For example, the parameter indicated by the second request information includes one or more of the following: a channel coefficient, phase information of one or more paths between the first apparatus and the second apparatus, Doppler frequency information of the one or more paths between the first apparatus and the second apparatus, Doppler spectrum information, or auto correlation function (auto correlation function, ACF) information. Alternatively, if the second request information does not indicate a parameter that needs to be reported, the first apparatus may determine the parameter to be reported.

Optionally, the second request information may indicate that the parameter to be reported is corrected based on a first phase.

The first apparatus may determine the channel coefficient by measuring the first reference signal corresponding to the first reference signal resource. Usually, the channel coefficient may include a channel coefficient on each subcarrier occupied by the first reference signal resource. For example, on a subcarrier of an OFDM symbol occupied by the first reference signal resource, the first apparatus may usually learn of a reference signal from the second apparatus based on configuration information and/or a standard related definition, and then the first apparatus may determine a channel coefficient based on the received signal through comparison. This process may also be understood as channel estimation. Optionally, in this process, the first apparatus may further perform processing such as windowing, filtering, and noise reduction.

The one or more paths include all or a part of transmission paths between the first apparatus and the second apparatus. Because signals received by the first apparatus are signals that are transmitted via the plurality of paths and that are mixed together, the first apparatus may distinguish the plurality of paths based on some dimensions. The dimensions include, for example, one or more of a delay (a reference signal usually needs to be a wideband signal), a Doppler frequency (a reference signal usually needs to be continuously or intermittently sent for a period of time), or an angle (a receive end usually needs to have a plurality of receive antennas and/or a transmit end sends a reference signal via a plurality of antennas). For example, for each of the one or more paths, the first apparatus may further determine one or more of parameters such as a delay, a Doppler frequency, or an angle of each path, and determine one or more of power, energy, amplitude, or phase information corresponding to each path.

For example, in FIG. 1, the apparatus 2 may transmit a signal from the apparatus 2 to the apparatus 1 via two paths, where one path is a path from the apparatus 2 directly to the apparatus 1, and the path may also be usually referred to as a direct path or a LoS path; and the other path is a path via which a signal sent by the apparatus 2 is transmitted to the apparatus 1 after being reflected by the target, and is also referred to as a reflection path. In this case, a Doppler frequency of the direct path is mainly determined based on moving speeds of the apparatus 1 and the apparatus 2. For example, when both the apparatuses are in a static state, a Doppler frequency corresponding to the LoS path is 0, and parameters such as an amplitude and a phase of the LoS path are usually related to a transmission distance and a transmission medium between the two apparatuses. In addition to the moving speeds of the apparatus 1 and the apparatus 2, a Doppler frequency of the reflection path related to the target is also related to movement of the target. For example, when both the apparatus 1 and the apparatus 2 are in a static state, the Doppler frequency of the reflection path is mainly determined based on a moving speed of the target. An amplitude and a phase of the reflection path are related to a distance between the apparatus 2 and the target, a distance between the target and the apparatus 1, and a transmission medium, and are further related to a reflection coefficient of the target. An amplitude of the reflection coefficient of the target may be related to a radar cross-section (radar cross-section, RCS) of the target.

A plurality of paths distinguished by the first apparatus according to some methods may not necessarily correspond to a path in a real channel environment. For example, because the first apparatus has a limited capability of distinguishing a plurality of paths, a path identified by the first apparatus may correspond to a plurality of paths with similar parameters in a real environment. For example, when a bandwidth of the first reference signal is limited, a resolution capability of the first apparatus for identifying a multipath delay is also limited. In this case, the first apparatus may identify a plurality of paths with similar delays as one path. For another example, when the first apparatus has only one antenna (or one antenna port), the first apparatus does not have a multipath resolution capability in angle domain. In this case, if there are two paths with a same delay and a same Doppler frequency but different angles of arrival, the first apparatus may be able to distinguish a plurality of paths only in delay domain and Doppler domain, but cannot distinguish the plurality of paths in angle domain. Therefore, the first apparatus may still identify the two paths as one path. In embodiments of this application, multipath information reported by the first apparatus may be multipath information identified by the first apparatus.

The Doppler spectrum information may be used to reflect a Doppler frequency distribution status of a channel between the first apparatus and the second apparatus. A Doppler spectrum may include one or more of a Doppler power spectrum, a Doppler energy spectrum, a Doppler amplitude spectrum, or a Doppler phase spectrum, in other words, the Doppler spectrum indicates one or more of a power, energy, an amplitude, or a phase corresponding to each Doppler frequency component. In the Doppler spectrum, the Doppler frequency components are usually Doppler frequency components distributed at equal intervals (in an extreme case, all Doppler frequencies in a specific Doppler frequency range are included), and the Doppler spectrum may be determined based on a channel coefficient measured by the first apparatus. Further, in addition to the Doppler frequency, the Doppler spectrum may be related to another dimension. For example, the Doppler spectrum may be a delay-Doppler frequency spectrum, and the delay-Doppler frequency spectrum may reflect a joint distribution status of a delay and the Doppler frequency of the channel between the first apparatus and the second apparatus. For another example, the Doppler may be an angle-Doppler frequency spectrum, the angle-Doppler frequency spectrum may reflect a joint distribution status of an angle and the Doppler frequency of the channel between the first apparatus and the second apparatus, and the angle may be an angle of arrival, or may be an angle of departure (also referred to as a departure angle), or may be an angle of arrival plus an angle of departure, where both the angle of arrival and the angle of departure may include an angle in a horizontal direction and/or an angle in a vertical direction. For another example, the Doppler spectrum may be a delay-angle-Doppler frequency spectrum, and the delay-angle-Doppler frequency spectrum may reflect a joint distribution status of a delay, an angle, and the Doppler frequency of the channel between the first apparatus and the second apparatus. In an actual processing process, the first apparatus may determine, based on channel coefficients (for example, channel coefficients in different frequency units, in time subunits, and on antennas), channel distribution spectrums related to several dimensions according to methods such as Fourier transform, multiple signal classification (multiple signal classification, MUSIC), and compressive sensing. Further, the first apparatus may identify a plurality of paths at a position at which a parameter like energy, an amplitude, or a power on the channel distribution spectrum is greater than a threshold.

The auto correlation function information is usually used to describe a correlation degree of a channel in different periods. Usually, when the channel presents a periodic change, a local peak value of an auto correlation function of the channel occurs in a period. The auto correlation coefficient may also be determined based on the channel coefficient measured by the first apparatus.

Optionally, the second request information may further indicate the first apparatus to report a corrected measurement result, or indicate the first apparatus to perform phase correction when reporting the measurement result, for example, indicate the first apparatus to report a measurement result obtained through correction based on the first phase. The first phase is described below.

Alternatively, the first apparatus may actively report the measurement result without needing to be configured by the third apparatus. Therefore, S202 is an optional step.

S203: The second apparatus sends the first reference signal. Correspondingly, the first apparatus receives the first reference signal. The second apparatus may send the first reference signal on the first reference signal resource, and the first apparatus may also receive the first reference signal on the first reference signal resource.

Optionally, that the first apparatus receives the first reference signal may be directly receiving the first reference signal from the second apparatus, or may be indirectly receiving the first reference signal from the second apparatus. For example, when the first apparatus is a chip, an external antenna that does not belong to the first apparatus may first receive the first reference signal, and then transfer, to the first apparatus through a communication interface of the first apparatus, the first reference signal received by the antenna. The first apparatus receives another reference signal (for example, a second reference signal and/or a third reference signal) or information (for example, configuration information and/or indication information) in a similar manner. Details are not described below.

S204: The first apparatus sends first information to the third apparatus. Correspondingly, the third apparatus receives the first information from the first apparatus.

The first information may be obtained by correcting the measurement result of the first reference signal based on the first phase. For example, the first apparatus measures the first reference signal, and may obtain a measurement result, for example, referred to as a measurement result A. The first apparatus corrects the measurement result A based on the first phase, and may obtain the first information. The first information may also be referred to as a corrected measurement result. Alternatively, it may be understood more broadly that the first information may be determined based on the first phase and the measurement result of the first reference signal.

The first reference signal resource may occupy one or more time subunits, and the first apparatus may determine the first phase for each of the one or more time subunits. For example, for a time subunit n occupied by the first reference signal resource, the first phase determined by the first apparatus is *θₙ*.

For any time subunit, the first phase may be a phase determined based on a first path, or a phase determined based on a first path and the measurement result of the first reference signal. The first path is, for example, one of the one or more paths between the first apparatus and the second apparatus. Optionally, the first path is, for example, a path with a smallest delay among the one or more paths, or a path that is earliest detected (or received) by the first apparatus in the one or more paths. For example, the first path is a LoS path between the first apparatus and the second apparatus. Alternatively, the first path may be another path in the one or more paths. This is not limited.

The first path in embodiments of this application may also be understood as a reference path, in other words, the first path is introduced as a phase reference in embodiments of this application. When the first path is stationary, a phase of the first path also remains constant. However, due to device factors, a phase actually measured by the first apparatus changes. Therefore, the phase of the first path also reflects a phase change caused by the device factor, and the measurement result of the first reference signal is corrected based on the first phase, so that impact of the device factor on the measurement result can be eliminated as much as possible, to improve sensing accuracy. When a LoS path exists between the first apparatus and the second apparatus, and both the first apparatus and the second apparatus are in a static state, a phase of the LoS path remains unchanged. In addition, because signal strength of the LoS path is large, an extracted phase is more accurate. Therefore, a correction effect obtained when the LoS path is selected as the first path is good. Alternatively, when no LoS path exists between the first apparatus and the second apparatus, the first apparatus and the second apparatus may search for another path with a stable phase and large signal strength as the first path. Optionally, even if a LoS path exists between the first apparatus and the second apparatus, the first apparatus and the second apparatus may also search for another path that is with a stable phase and that is different from the LoS path as the first path. A specific manner in which the first apparatus and the second apparatus determine the first path is not limited in embodiments of this application.

In another case, when a to-be-sensed target and the first apparatus are in similar motion states, a result of sensing the target may include motion information of the target. For example, the to-be-sensed target is a person, and the first apparatus is a mobile phone. When the person is walking with the mobile phone, a sensing result obtained by sensing the person may include motion information of the person. However, if a sensing service needs to sense micro-motion information like breathing or heartbeat of the person, motion of the person causes large interference to detection of the breathing or the heartbeat of the person. In this case, the first path may be set as a LoS path between the mobile phone and the second apparatus. Because moving speed directions of the person and the mobile phone are approximately consistent, a phase change of the LoS path mainly includes the motion information of the person. In this case, the sensing result is corrected based on a phase of the LoS path, so that interference of the motion of the person on a sensing result of a parameter like the breathing or the heartbeat can be suppressed.

Optionally, for any time subunit, the first phase is, for example, a phase determined based on a channel coefficient measured after the first reference signal is received via the first path. The first reference signal resource may occupy a plurality of subcarriers. After receiving the first reference signal via the first path, the first apparatus may obtain a channel coefficient via measurement for each subcarrier occupied by the first reference signal resource. In this case, the first phase may be determined based on phases of the channel coefficients that are on all the subcarriers and that are measured after the first reference signal is received via the first path. For example, the first phase is a phase corresponding to a channel coefficient measured after the first reference signal is received via the first path.

Alternatively, for any time subunit, the first phase is, for example, a phase determined based on a channel coefficient that is on a reference subcarrier and measured after the first reference signal is received via the first path. For example, the first phase is a phase corresponding to a channel coefficient that is on a reference subcarrier and measured after the first reference signal is received via the first path. In this implementation, the first phase may be associated with the reference subcarrier. The reference subcarrier is, for example, one of the subcarriers occupied by the first reference signal resource, one subcarrier in a resource pool in which the first reference signal resource is located, one subcarrier in a bandwidth part (bandwidth part, BWP) in which the first reference signal resource is located, one subcarrier at a frequency layer at which the first reference signal resource is located, or a subcarrier whose center frequency is 0. When the reference subcarrier is one of the subcarriers occupied by the first reference signal resource, for example, the reference subcarrier is a subcarrier that is with a lowest or highest frequency and that is occupied by the first reference signal resource, or a central subcarrier occupied by the first reference signal resource; or may be any subcarrier occupied by the first reference signal resource.

Alternatively, for any time subunit, the first phase is, for example, a phase determined based on a channel coefficient measured after the first reference signal is received via the first path and via a reference antenna port and/or a first reference signal port. For example, the first phase is a phase corresponding to a channel coefficient measured after the first reference signal is received via the first path and the reference antenna port and/or the first reference signal port. In this implementation, the first phase may be associated with the reference antenna port and/or the first reference signal port. When the first reference signal resource is a multi-port reference signal resource, the second apparatus may send a first reference signal having a plurality of ports, which is also referred to as a multi-port first reference signal. Usually, the second apparatus may send the multi-port first reference signal via a plurality of antenna ports. Reference signal resource ports used by the plurality of antenna ports may be orthogonal (for example, orthogonal in joint space of a time domain, a frequency domain, and a code domain). Therefore, the reference antenna port may be associated with a transmit antenna port. In addition, the first apparatus may also receive the first reference signal via a plurality of receive antenna ports. For example, the first apparatus uses the plurality of receive antenna ports to perform angle estimation. In this case, the first reference signal may not need to have a plurality of receive antenna ports. When the second apparatus sends the multi-port first reference signal via the plurality of transmit antenna ports, even if the first apparatus receives, from the plurality of ports, the first reference signal via the first path and a same receive antenna port, measured phases may also be different. When the first apparatus receives the first reference signal via the plurality of receive antenna ports, even if the first reference signal has only one port (which may also be understood as that the second apparatus sends the first reference signal via only one antenna port), the first apparatus receives the first reference signal via the first path and the different antenna ports, and measured phases may also be different. A case in which the first reference signal has a plurality of ports and the first apparatus has a plurality of receive antenna ports is similar. Details are not described again. Therefore, in the foregoing case, it may be specified or defined as follows: In different time subunits, an antenna port (which may include a transmit antenna port and/or a receive antenna port) and a reference signal port (for example, the first reference signal port) that are associated with the first phase may be respectively fixed ports, to ensure consistency of measurement results in the different time subunits.

Alternatively, for any time subunit, the first phase is, for example, a phase determined based on a channel coefficient that is on a reference subcarrier and measured after the first reference signal is received via the first path and via a reference antenna port and/or a first reference signal port. For example, the first phase is a phase corresponding to a channel coefficient that is on the reference subcarrier and measured after the first reference signal is received via the first path and the reference antenna port and/or the first reference signal port. In this implementation, the first phase may be associated with the reference subcarrier, and associated with the reference antenna port and/or the first reference signal port.

Optionally, in the foregoing manner, the reference frequency unit (or the reference subcarrier), the first reference signal port, and the reference antenna port (including a transmit antenna port and/or a receive antenna port) may be predefined or pre-configured, or may be determined based on specific configuration information. For example, the first configuration information indicates one or more of the specific reference frequency unit, the first reference signal port, or the reference antenna port. For example, the reference antenna port is one of antenna ports used by the second apparatus to send the first reference signal, for example, an antenna port with a smallest or largest port number in the antenna ports used by the second apparatus to send the first reference signal. For another example, the reference antenna port is one of antenna ports used by the first apparatus to receive the first reference signal, for example, an antenna port with a smallest or largest port number in the antenna ports used to receive the first reference signal. For another example, the first reference signal port is one of a plurality of reference signal ports corresponding to the first reference signal. For example, the first reference signal port is a reference signal port with a smallest or largest port number in the plurality of reference antenna ports.

Optionally, when the first apparatus has a plurality of reference antenna ports or reference signal ports, the first apparatus may determine one first phase for each reference antenna port or reference signal port corresponding to one time subunit. For example, for a time subunit n, the first apparatus may determine that the first phase on a reference antenna port p is *θ*_{*n*,*p*}.

To determine the first phase, the first apparatus first needs to determine the first path. In this embodiment of this application, the first apparatus may determine the first path in a plurality of manners. The following provides examples for description.

1. In a first manner, the first apparatus determines the first path based on the measurement result of the first reference signal.

In this manner, after receiving the first reference signal, the first apparatus may determine the first path without an indication of another apparatus (for example, the second apparatus), to help reduce signaling overheads.

Optionally, the first apparatus may distinguish the plurality of paths based on the measurement result of the first reference signal, and then determine the first path from the plurality of paths. For example, the first apparatus distinguishes the one or more paths between the first apparatus and the second apparatus in delay domain according to some existing methods. For another example, the first apparatus may alternatively distinguish the plurality of paths in delay+angle domain (which may include an azimuth angle of arrival (angle of arrival, AoA), a zenith AoA, an azimuth angle of departure (Angle of Departure, AoD), and a zenith AoD). Optionally, the first apparatus may determine a path with a smallest delay in the plurality of paths as the first path, determine a path with strongest one or more of energy, an amplitude, or a power as the first path, or may determine the first path with reference to a delay and one or more of energy, an amplitude, or a power.

For example, after receiving the first reference signal, the first apparatus may determine a plurality of paths, where each path has a corresponding propagation delay, AoA, or AoD. A propagation delay corresponding to one path may be an absolute propagation delay (to be specific, a time interval between a time point at which the second apparatus sends the first reference signal and a time point at which the first apparatus receives the first reference signal via the path), or may be a relative propagation delay. For example, the relative delay is a delay of a receiving time point of the path relative to a start time domain position or an end time domain position of a time unit or a time subunit in which the first reference signal is located. Usually, a LoS path is a path with a smallest delay between two apparatuses. Therefore, the first apparatus may determine, from the plurality of paths, a path with earliest time of arrival as a LoS path, and the LoS path may be used as the first path. An AoD of one path may be an AoD in a local coordinate system or a global coordinate system. A special AoD may be an AoD in a local coordinate system in which an antenna panel of the second apparatus is used as an xy plane. An AoA of one path may be an AoA in a local coordinate system or a global coordinate system. An AoA and an AoD in the following descriptions are similar. Details are not described again.

The method for distinguishing the plurality of paths by the first apparatus may include discrete Fourier transform (discrete Fourier transform, DFT), inverse discrete Fourier transform (inverse DFT, IDFT), MUSIC, or the like, or may include another algorithm.

In this manner, the first apparatus may further report indication information of the first path to the third apparatus, for example, information such as a delay and an angle (including an AoA and an AoD) corresponding to the first path.

2. In a second manner, the third apparatus sends first indication information to the first apparatus, where the first indication information includes related parameter information of the first path, and the first apparatus may determine the first path based on the first indication information. This manner can simplify an implementation of the first apparatus, and therefore can be applicable to an apparatus with a low capability.

In this manner, the first indication information received by the first apparatus may include configuration information of the first path, and the first apparatus may determine the first path based on the configuration information of the first path. For example, the first indication information is included in the first configuration information, or may be separately sent. In a possible implementation, the configuration information of the first path may include one or more of the following: AoA information associated with the first path, delay information associated with the first path, a precoding vector corresponding to the first path, path index information associated with the first path, identification information of the first path, or a timestamp associated with the first path.

For example, the second apparatus may send the second reference signal in advance. After receiving the second reference signal, the first apparatus may send a first measurement result to the third apparatus. The first measurement result is a measurement result of the second reference signal. The third apparatus may determine the first path based on the first measurement result. For example, the first path is a LoS path. When the third apparatus has a strong calculation and processing capability, some algorithms with good performance may be used to assist in determining a more accurate LoS path. Optionally, the third apparatus may send, to the first apparatus by using the configuration information of the first LoS path, a related parameter used to determine the LoS path, so that the first apparatus can determine the first path based on the configuration information of the first path.

In a possible implementation, the first measurement result may include one or more of the following: at least one second channel coefficient, at least one first delay power spectrum, at least one first precoding matrix indicator (precoding matrix indicator, PMI), or path information of N paths. The N paths are all or a part of the paths between the first apparatus and the second apparatus, and N is a positive integer. Path information of one path may include one or more of the following: an index of the path, an identifier of the path, delay information corresponding to the path, AoA information of the path, angle of departure (angle of departure, AoD) information of the path, or LoS path information of the path. LoS path information of one path may indicate whether the path is a LoS path and/or indicate a probability that the path is a LoS path. For example, if one of the N paths is a second path, path information of the second path may include one or more of the following: an index of the second path, an identifier of the second path, delay information corresponding to the second path, AoA information of the second path, AoD information of the second path, or LoS path information of the second path. LoS path information of the second path may indicate whether the second path is a LoS path and/or indicate a probability that the second path is a LoS path.

When the first measurement result includes the at least one second channel coefficient, one of the at least one second channel coefficient may be a channel coefficient vector or a channel coefficient matrix in a plurality of frequency units and/or a plurality of time units and/or a plurality of antenna units. The third apparatus may determine one or more of the following based on the at least one second channel coefficient: a delay of each path of the part or all of the paths between the first apparatus and the second apparatus (a delay of one path may be an absolute propagation delay from sending the second reference signal by the second apparatus to receiving the second reference signal by the first apparatus, or may be a relative propagation delay of receiving the second reference signal by the first apparatus relative to a start time domain position or an end time domain position of a reference time unit or a reference time subunit, where for example, the reference time unit is a time unit or a time subunit in which the second reference signal is located), an AoA (which may be in a local coordinate system or may be in a global coordinate system of the first apparatus) and/or an AoD that correspond/corresponds to each of the part or all of the paths between the first apparatus and the second apparatus, an amplitude corresponding to each of the part or all of the paths between the first apparatus and the second apparatus, a phase corresponding to each of the part or all of the paths between the first apparatus and the second apparatus, or a receive power or energy corresponding to each of the part or all of the paths between the first apparatus and the second apparatus. The configuration information of the first path may indicate one or more of the following: a delay of the first path, an AoA associated with the first path, an AoD associated with the first path, an amplitude corresponding to the first path, a phase corresponding to the first path, or a receive power corresponding to the first path. For example, the configuration information of the first path indicates a delay corresponding to the first path. The first apparatus may determine, based on the delay when receiving the first reference signal, a phase of a channel coefficient under the delay (for example, a phase of a tap coefficient under the delay after IDFT is performed on each subcarrier channel coefficient) as the first phase. For another example, the configuration information of the first path indicates the AoA associated with the first path. The first apparatus may determine a direction of the first path based on the AoA, and then determine, with reference to a channel coefficient on each receive antenna port, a phase of a channel coefficient in the direction (for example, a phase of a tap coefficient at a frequency corresponding to the AoA after DFT is performed on the channel coefficient on each receive antenna port) as the first phase.

When the first measurement result includes the at least one first delay power (or may be energy, amplitude, or coefficient) spectrum, the third apparatus may determine delays of different paths based on the first delay power spectrum, and determine the delay of the first path from the delays. In this case, the configuration information of the first path may indicate the delay corresponding to the first path, and the first apparatus may determine, based on the delay when receiving the first reference signal, a phase of a channel coefficient under the delay (for example, a phase of a tap coefficient under the delay after IDFT is performed on each subcarrier channel coefficient) as the first phase. Optionally, the delay power spectrum may be delay power spectrums on a plurality of antennas and/or at a plurality of moments (for example, in time units or time subunits). The third apparatus may perform operations such as combining, averaging, or filtering on the plurality of delay power spectrums.

When the first measurement result includes the at least one PMI (in this case, the second reference signal is usually a multi-antenna port reference signal), the PMI may be a space-domain compressed PMI, may be a space-domain and frequency-domain compressed PMI, or may be a PMI of another type. The third apparatus may determine departure angles of different paths on a first device side based on the at least one PMI, and determine, from the departure angles, a departure angle corresponding to the first path. The configuration information of the first path may indicate a precoding vector (or equivalent to a departure angle). The first apparatus may determine, based on information about the precoding vector when receiving the first reference signal (usually, the first reference signal needs to be a multi-antenna port reference signal), a phase of a channel coefficient at the departure angle (for example, a phase of a tap coefficient at a frequency corresponding to the departure angle after DFT is performed on a channel coefficient on each reference signal transmit port). Therefore, a direction of the first path is determined more accurately based on the first reference signal. When the PMI includes a frequency-domain compressed PMI, the third apparatus may also determine, based on the at least one PMI, delays associated with different paths. Therefore, the delay corresponding to the first path may also be indicated in the configuration information of the first path. Details are not described herein again.

Optionally, the configuration information of the first path may alternatively indicate the foregoing plurality of pieces of information, and the first apparatus may more accurately determine coefficient and phase information of the first path by combining the plurality of pieces of information.

When the first measurement result includes the path information of the N paths, the N paths may be N paths determined by the first apparatus. AoA information of one path may include an AoA of the path, and the AoA of the path may include an azimuth angle of arrival (azimuth angle of arrival, A-AoA) of the path and/or a zenith angle of arrival (zenith angle of arrival, Z-AoA) of the path. An AoA of one path may be an AoA using a local coordinate system (local coordinate system, LCS) as a reference, or an AoA using a global coordinate system (global coordinate system, GCS) as a reference. An AoD of the path may include an azimuth AoD of the path and/or a zenith AoD of the path. An AoA and/or an AoD of one path may be referenced to a local coordinate system, or may be referenced to a global coordinate system.

The third apparatus may determine the first path from the N paths, for example, determine a LoS path, and indicate, in the configuration information of the first path, one or more of an index, an identifier, or path information of the first path in the N paths. The first apparatus may determine the first path based on the configuration information of the first path.

There may be one or more second reference signals. In this case, the first measurement result may include one or more measurement results. In this case, the third apparatus may determine a parameter of the first path based on all or a part of the one or more second reference signals, or determine a parameter of the first path based on all or a part of the measurement results in the first measurement result. The first apparatus can determine the parameter of the first path based on the configuration information of the first path, but may not be able to determine a specific second reference signal or specific second reference signals corresponding to the parameter of the first path, or cannot determine a specific measurement result or specific measurement results corresponding to the parameter of the first path. Therefore, optionally, the first indication information may further include indication information of the second reference signal and/or indication information of the first measurement result. The indication information of the second reference signal is, for example, referred to as indication information A, and may indicate a part or all of the one or more second reference signals. The second reference signal indicated by the indication information A is a second reference signal used to determine the parameter of the first path. The indication information of the first measurement result is, for example, referred to as indication information B, and may indicate a part or all of the measurement results included in the first measurement result. The measurement result indicated by the indication information B is a measurement result used to determine the parameter of the first path. Therefore, the first apparatus can determine the parameter of the first path with reference to the configuration information of the first path and the indication information A and/or the indication information B.

Optionally, the indication information A indicates the second reference signal, for example, indicating transmission time of the second reference signal in an indication manner. For example, the second reference signal is a periodic signal, and the indication information A may indicate one or more periods. This is equivalent to indicating that the parameter of the first path is determined based on the second reference signal in the one or more periods. Alternatively, the indication information A may indicate a serial number of the second reference signal, or the like. An indication manner is not limited.

Alternatively, the first indication information may include neither the indication information A nor the indication information B. In this case, if there are a plurality of second reference signals and/or the first measurement result includes a plurality of measurement results, the first apparatus and the third apparatus may consider by default that the parameter of the first path is determined based on a first transmitted second reference signal (or a first transmitted measurement result in the first measurement result), or is determined based on a last transmitted second reference signal (or a last transmitted measurement result in the first measurement result).

In addition to the two manners described above, the first apparatus may alternatively determine the first path in another manner. This is not limited in this embodiment of this application. After determining the first path, the first apparatus may determine the first phase. For descriptions of the first phase, refer to the foregoing descriptions.

Optionally, it can be learned from the foregoing descriptions that, in a manner in which the first apparatus determines the first path based on the first indication information, the method may further include S205 to S207. For example, S205 to S207 are performed before S204. In FIG. 2, an example in which S205 to S207 are performed before S201 is used.

S205: The second apparatus sends the second reference signal. Correspondingly, the first apparatus receives the second reference signal.

For example, the third apparatus may first configure a second reference signal resource for the first apparatus, and then the second apparatus sends the second reference signal on the second reference signal resource. For a process in which the third apparatus configures the second reference signal resource, refer to the foregoing descriptions of the process of configuring the first reference signal resource. Details are not described again. Alternatively, the first apparatus may determine the second reference signal resource. Alternatively, the third apparatus may not need to configure the second reference signal resource for the first apparatus, and the second reference signal resource may be pre-configured in the first apparatus or predefined in a protocol.

S206: The first apparatus sends the measurement result of the second reference signal, for example, referred to as the first measurement result, to the third apparatus. Correspondingly, the third apparatus receives the first measurement result.

For more content of S206, for example, the first measurement result, refer to the foregoing descriptions.

S207: The third apparatus sends the first indication information to the first apparatus. Correspondingly, the first apparatus receives the first indication information from the third apparatus.

For more content of S207, for example, the first indication information, refer to the foregoing descriptions.

In the foregoing descriptions of the second manner, the third apparatus determines the parameter of the first path based on the second reference signal (or a second measurement result). Alternatively, in addition, the third apparatus may determine the first path based on other information.

In addition to the foregoing several manners, the first apparatus may alternatively determine the first path in another manner. This is not limited in this embodiment of this application.

After determining the first path, the first apparatus may determine the first phase, to correct the measurement result of the first reference signal (referred to as the measurement result A above) based on the first phase, to obtain the first information. Optionally, the first information includes one or more of the following: a first channel coefficient, the phase information of the one or more paths between the first apparatus and the second apparatus, the Doppler frequency information of the one or more paths, first Doppler spectrum information, or first auto correlation function information. If the second request information in S202 indicates the parameter that needs to be reported, the first information may include the parameter indicated by the second request information; or if the second request information in S202 does not indicate the parameter that needs to be reported, the first apparatus may determine the parameter included in the first information.

The first channel coefficient may be obtained by correcting the measurement result (for example, including an initial channel coefficient) of the first reference signal based on the first phase. The phase information of the one or more paths may be obtained by correcting the measurement result of the first reference signal (for example, initial phase information of the one or more paths) based on the first phase. The first Doppler spectrum information and/or the first auto correlation function information may be obtained based on the first channel coefficient. However, because the first channel coefficient is obtained by correcting the measurement result of the first reference signal based on the first phase, the first Doppler spectrum information and/or the first auto correlation function information may also be considered as being obtained by correcting the measurement result of the first reference signal based on the first phase.

For example, the first channel coefficient includes a channel coefficient corresponding to one time subunit occupied by the first reference signal resource, or includes a channel coefficient corresponding to each of the plurality of time subunits occupied by the first reference signal resource. Optionally, the first channel coefficient may further include a channel coefficient on one or more frequency units and one or more antenna ports (including a transmit antenna port and/or a receive antenna port). Therefore, the first channel coefficient may be a scalar, a vector, or a matrix (including a two-dimensional matrix or a multi-dimensional matrix). Optionally, the first channel coefficient may be uncompressed information, or may be information obtained by compressing, in any one or more domains such as frequency domain, time domain, or angle domain, a channel coefficient obtained through correction. For example, the channel coefficient may be compressed in a form similar to a precoding matrix indicator in 5G and then reported.

For example, for a time subunit n occupied by the first reference signal resource, the first apparatus may measure the first reference signal received in the time subunit n, and may determine, based on an obtained measurement result, that an initial channel coefficient corresponding to the time subunit n is ***H***ₙ (the initial channel coefficient is a channel coefficient before the first phase is corrected, or a channel coefficient obtained through direct measurement (which may include operations such as basic channel estimation, time domain windowing, and filtering), and may include initial channel coefficients on a plurality of frequency units, in this case, ***H***ₙ may be a vector), and ***H***ₙ may include only a resource occupied by the first reference signal resource, and may also include a resource that is not occupied by the first reference signal resource, for example, a channel coefficient that is on the resource that is not occupied by the first reference signal resource and that is obtained based on a difference, through filtering, or according to another channel estimation method. In addition, the first phase corresponding to the time subunit n may be further determined as *θₙ* based on the obtained measurement result and the determined first path.

In a possible manner, the first apparatus may determine that the delay corresponding to the first path is *τₙ*. For example, *τₙ* may be determined by the first apparatus, or may be configured by another apparatus. In this case, the first apparatus may determine a phase of the first phase *θₙ* being ∑*ₖ H*_{*n*,*k*}e^{*j*2π*k*Δ*fτ*ₙ}, or a phase of ∑*ₖ H_{n,k}*e^{*j*2π*f*ₖ*τ*ₙ}. *H*_{*n*,*k*} represents a channel coefficient in a time subunit n and on a frequency unit (for example, a subcarrier) k, and j represents an imaginary unit, for example, $j = \sqrt{- 1}$. k represents an index of the frequency unit subcarrier, k may be an integer greater than or equal to 0, and Δ*f* represents a size of the frequency unit subcarrier, for example, represents a frequency width of one subcarrier. *fₖ* represents an absolute frequency size of the frequency unit subcarrier k. In addition, the first apparatus may alternatively determine the first phase or the like according to a similar method with reference to an angle. Details are not described herein again.

The first apparatus may correct ***H***ₙ based on *θₙ*, to obtain the first channel coefficient corresponding to the time subunit n, or obtain the channel coefficient that corresponds to the time subunit n and that is included in the first channel coefficient. For example, the first channel coefficient corresponding to the time subunit n or the channel coefficient that corresponds to the time subunit n and that is included in the first channel coefficient satisfies the following relationship: ${H}_{n}^{′} = {H}_{n} {e}^{- {jθ}_{n}}$${H}_{n}^{′}$ represents the first channel coefficient corresponding to the time subunit n, or represents the channel coefficient that corresponds to the time subunit n and that is included in the first channel coefficient.

The formula 1 may also be understood as that a phase of each element in ***Hₙ*** is subtracted by *θₙ*, to obtain ${H}_{n}^{′}$.

The foregoing method may be further extended. For example, in a scenario in which the initial channel coefficient ***H***ₙ further includes an additional antenna port (receive antenna port and/or transmit antenna port) domain or a reference signal port domain, an implementation method is similar. Details are not described herein again.

Optionally, the first channel coefficient included in the first information includes, for example, ${H}_{n}^{′}$; or includes information obtained by compressing ${H}_{n}^{′}$ in any one or more domains such as frequency domain, time domain, or angle domain. For a specific method, refer to PMI reporting in a 5G system. Alternatively, if the first information includes the first channel coefficient ${H}_{n}^{′}$ and does not include other information, and the first apparatus does not perform further processing (for example, compression) on the first channel coefficient, the first apparatus may directly report the first channel coefficient after determining the first channel coefficient, and may not perform the step of determining the first information based on the first channel coefficient.

Optionally, when the first reference signal is a multi-port signal, an initial channel coefficient, of the first reference signal in the time subunit n, corresponding to each of a plurality of ports may be corrected based on the first phase (for example, a phase of the initial channel coefficient may be subtracted by *θₙ* or multiplied by e^{-*jθ*ₙ}). When the first apparatus has a plurality of receive antenna ports, a channel coefficient on each receive antenna port in the time subunit n may also be corrected based on the first phase.

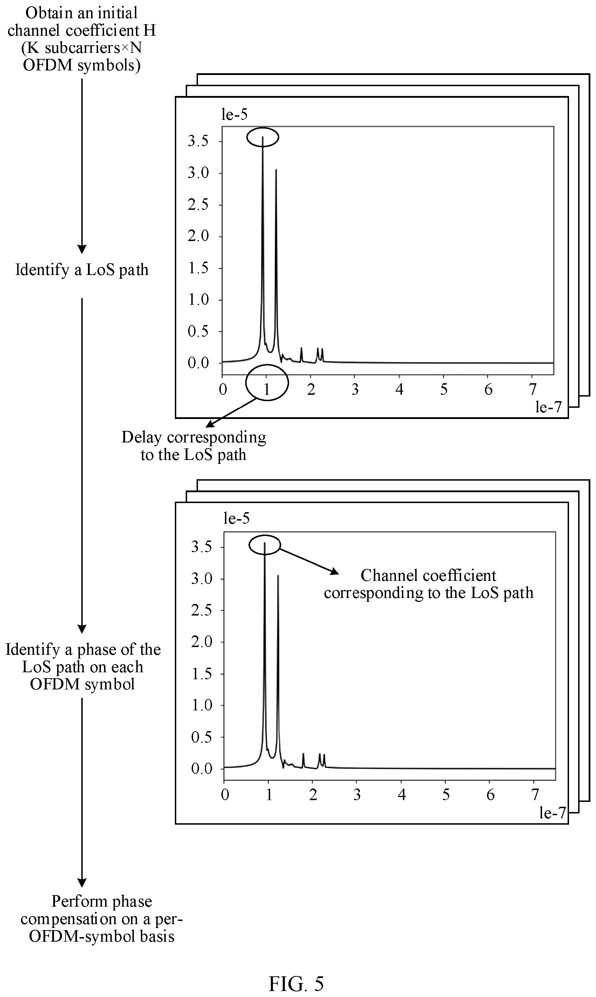

FIG. 5 is an example in which the first apparatus obtains a first channel coefficient. In FIG. 5, the horizontal axis represents a delay, measured in seconds, and the vertical axis represents an amplitude of a delay component. For example, for N OFDM symbols occupied by the first reference signal resource, the first apparatus first obtains an initial channel coefficient ***H***, where ***H*** includes channel coefficients corresponding to K subcarriers×N OFDM symbols. The first apparatus determines the first path. In addition, the first apparatus identifies a first phase *θₙ* on each of the OFDM symbols. For example, for an OFDM symbol n, the first apparatus identifies that an original coefficient corresponding to a channel coefficient on the OFDM symbol n is as follows: ${H}_{n} = {A}_{n} {e}^{j \left({θ}_{n}^{0}+{θ}_{n}^{′}\right)}$

In the formula 2, ***H***ₙ represents an original phase corresponding to the channel coefficient on the OFDM symbol n (refer to a 1^{st} peak value from left to right in a coordinate diagram below FIG. 5), *Aₙ* represents an amplitude corresponding to a LoS path on the OFDM symbol n, ${θ}_{n}^{0}$ represents a first phase corresponding to the LoS path on the OFDM symbol n, and ${θ}_{n}^{′}$ represents phase deviations caused by factors such as carrier frequency deviations and phase noise on the OFDM symbol n. In this case, entire ${θ}_{n}^{0} + {θ}_{n}^{′}$ may be used as the first phase for subsequent phase correction.

Then, for an initial channel coefficient corresponding to each OFDM symbol, the first apparatus may determine a first phase on a corresponding OFDM symbol, and then perform compensation based on the first phase. For a compensation manner, refer to the formula 1.

Phase information of any one of the one or more paths, for example, indicates a phase of the path, or indicates a phase difference between the phase of the path and the first phase. If phase information of one path indicates a phase of the path, the phase information may indicate a phase, which may also be referred to as an adjusted phase, obtained by adjusting an initial phase of the path based on the first phase. A path, other than the LoS path, between the first apparatus and the second apparatus may be referred to as a reflection path, and one reflection path usually corresponds to one reflector (or referred to as a target). Therefore, the reflection path may also be understood as being associated with a reflection body. In this case, a delay, a phase, an angle, and the like of the reflection path may also be understood as a delay, a phase, an angle, and the like associated with the reflection body or a target.

Optionally, phases of a plurality of paths that may be reported by the first apparatus may be a plurality of paths other than the first path. Because the first path is used as the reference path, according to the method in this embodiment of this application, a phase corresponding to the first path may always be zero, and the first apparatus may not report the phase.

Optionally, an adjusted phase of the one or more paths may also correspond to a time unit or a time subunit. For example, for one time subunit occupied by the first reference signal, phase information of any one of the one or more paths may indicate an adjusted phase of the path in the time subunit, or indicate a phase difference between an initial phase of the path in the time subunit and the first phase in the time subunit. For example, for each time subunit occupied by the first reference signal resource, the first information may include information that is about the one or more paths and that corresponds to the time subunit, in other words, for each path, a plurality of adjusted phases in different time units or different time subunits may be reported; or the first information may include only information that is about the one or more paths and that corresponds to one of the time subunits occupied by the first reference signal resource. The first apparatus may distinguish the paths based on ***H**ₙ*; through DFT, IDFT, or MUSIC; or according to another method, and determine an initial phase of each path.

The first apparatus may select a subcarrier s from the subcarriers occupied by the first reference signal resource as a reference subcarrier. (As described above, the first phase may be associated with the reference subcarrier, and the reference subcarrier herein and the reference subcarrier associated with the first phase may be a same subcarrier, or may be different subcarriers. For ease of differentiation, the reference subcarrier herein may be referred to as a first reference subcarrier, and the first reference subcarrier is denoted as, for example, a subcarrier s. For a manner of determining the first reference subcarrier, refer to the foregoing method for determining the reference subcarrier. Details are not described herein again.) In addition, the first apparatus performs, based on the first phase, phase correction on the channel coefficients in the time subunits occupied by the first reference signal resource (for a correction manner, refer to the foregoing descriptions). For each time subunit, a channel coefficient corresponding to the subcarrier s may be obtained, and a channel coefficient $\left[{H}_{s , {n}_{0}}^{′},{H}_{s , {n}_{1}}^{′},…\right]$ corresponding to the subcarrier s in each time subunit may be obtained, where n₀, n₁, and the like represent indexes of the time subunits. Doppler spectrum information (for example, the first Doppler spectrum information) or Doppler frequency information of one or more paths may be obtained based on the channel coefficient $\left[{H}_{s , {n}_{0}}^{′},{H}_{s , {n}_{1}}^{′},…\right]$ through DFT or IDFT, or according to another algorithm. A Doppler spectrum indicated by the first Doppler spectrum information may include one or more of information such as energy information, power information, amplitude information, or phase information corresponding to a plurality of Doppler frequencies. The Doppler frequency information of the one or more paths may indicate one or more of information such as a Doppler frequency, energy information, power information, amplitude information, or phase information of each path.

Optionally, the first apparatus may alternatively select each of the plurality of subcarriers occupied by the first reference signal resource as a first reference subcarrier. For each first reference subcarrier, the first apparatus may determine Doppler spectrum information or Doppler frequency information of one or more paths. The first Doppler spectrum information in the first information may be determined based on the Doppler spectrum information corresponding to the plurality of first reference subcarriers; and/or the Doppler frequency information of the one or more paths that is in the first information may be determined based on the Doppler frequency information that is of the one or more paths and that corresponds to the plurality of first reference subcarriers. Alternatively, the first Doppler spectrum information in the first information may include a plurality of pieces of Doppler spectrum information determined based on the plurality of first reference subcarriers; and/or Doppler information of each path in the Doppler frequency information of the one or more paths that is in the first information may include a plurality of pieces of Doppler information of each path determined based on the plurality of first reference subcarriers. For example, the Doppler frequency information of the one or more paths that is in the first information may be obtained by performing linear combination on the Doppler frequency information that is of the one or more paths and that corresponds to the plurality of first reference subcarriers. For example, in a linear combination manner, the first apparatus may perform linear combination, in a maximum ratio combining manner, on the Doppler frequency information that is of the one or more paths and that corresponds to the plurality of first reference subcarriers, to obtain the Doppler frequency information of the one or more paths that is included in the first information.

Alternatively, the first apparatus may perform similar operations with reference to a plurality of ports of the first reference signal and/or a plurality of receive antenna ports of the first apparatus.

Alternatively, the Doppler spectrum in the first information may be a delay-Doppler spectrum, an angle-Doppler spectrum, a delay-angle-Doppler spectrum, or the like. For the delay-Doppler spectrum, the first apparatus separately performs phase correction on the initial channel coefficients in the time subunits occupied by the first reference signal resource (for a correction manner, refer to the foregoing descriptions), to obtain channel coefficients corresponding to the frequency units and the time subunits that are occupied by the first reference signal resource. The channel coefficients may form a two-dimensional channel coefficient matrix. For example, if a channel coefficient corresponding to a time subunit n occupied by the first reference signal resource is represented as ***H**'ₙ*, the two-dimensional channel coefficient matrix is represented as $\left[{H}_{{n}_{0}}^{′},{H}_{{n}_{1}}^{′},…\right]$, where n₀, n₁, and the like represent indexes of the time subunits. The channel coefficient matrix is processed through 2-dimensional DFT, IDFT, or MUSIC, or according to another algorithm, to obtain a delay-Doppler spectrum. For the angle (for example, an angle of arrival)-Doppler spectrum, the first apparatus performs phase correction on an initial channel coefficient on each receive antenna port in each time subunit. For example, in each time subunit n, an initial channel coefficient on each receive antenna port is corrected based on a first phase *θₙ* in a time subunit n, to obtain an angle (for example, an angle of arrival)-Doppler spectrum. In addition, the first apparatus may also obtain a corrected delay-angle-Doppler spectrum according to a similar method. Optionally, the first apparatus may further determine the Doppler frequency information of the one or more paths that is in the first information based on the delay-Doppler spectrum, the angle-Doppler spectrum, or the delay-angle-Doppler spectrum according to a similar method.

The auto correlation function information can usually reflect a feature of periodic motion. For example, in scenarios such as breathing, heartbeat, or mechanical vibration, a target usually moves in a periodic repetition manner. Therefore, a channel coefficient change caused by the motion of the target also presents a periodic change rule. Therefore, a period of the channel coefficient change may be obtained by determining the auto correlation function information corresponding to the channel coefficient. The period is usually the same as a period of the motion of the target. Therefore, a frequency of the motion of the target, for example, a breathing frequency, a heartbeat frequency, or a mechanical vibration frequency, may also be determined based on the auto correlation function information. For example, the first apparatus may select a subcarrier c from the subcarriers occupied by the first reference signal resource as a reference subcarrier. (As described above, the first phase may be associated with the reference subcarrier, and the reference subcarrier herein and the reference subcarrier associated with the first phase may be a same subcarrier, or may be different subcarriers. In addition, the reference subcarrier herein and the first reference subcarrier used to determine the Doppler information may be a same subcarrier, or may be different subcarriers. For ease of differentiation, the reference subcarrier herein may be referred to as a second reference subcarrier. For a manner of determining the second reference subcarrier, refer to the foregoing method for determining the reference subcarrier. Details are not described herein again.) In addition, the first apparatus performs, based on the first phase, phase correction on the channel coefficients in the time subunits occupied by the first reference signal resource (for a correction manner, refer to the foregoing descriptions). For each time subunit, a channel coefficient corresponding to the second reference subcarrier may be obtained, and a channel coefficient $\left[{H}_{s , {n}_{0}}^{′},{H}_{s , {n}_{1}}^{′},…\right]$ corresponding to the second reference subcarrier in each time subunit may be obtained, where n₀, n₁, and the like represent indexes of the time subunits, and s indicates the second reference subcarrier. The first apparatus may determine the auto correlation function information based on the channel coefficient $\left[{H}_{s , {n}_{0}}^{′},{H}_{s , {n}_{1}}^{′},…\right]$. For example, the auto correlation function information is the first auto correlation function information included in the first information.

Alternatively, the first apparatus may select the plurality of subcarriers occupied by the first reference signal resource as the second reference subcarriers, and may determine one piece of auto correlation function information for each second reference subcarrier. In this way, a plurality of pieces of auto correlation function information may be obtained in total. The first auto correlation function information included in the first information may directly include the plurality of auto correlation functions, or may be determined based on the plurality of pieces of auto correlation function information. Optionally, the first apparatus may perform linear combination on the plurality of pieces of auto correlation function information to obtain the first auto correlation function information. For example, a linear combination manner is that the first apparatus performs linear combination on the plurality of pieces of auto correlation function information in a maximum ratio combining manner.

Alternatively, the first apparatus may perform similar operations with reference to a plurality of ports of the first reference signal (which may also be equivalent to transmit antenna ports of the second apparatus) and/or a plurality of receive antenna ports of the first apparatus. For example, the first apparatus may perform the foregoing operation after determining one reference signal port and/or one receive antenna port of the first apparatus from the plurality of ports of the first reference signal and/or the plurality of receive antenna ports of the first apparatus. For a specific determining manner, refer to the foregoing manner of determining the reference antenna port and the first reference signal port. Details are not described herein again. Alternatively, the first apparatus may select a plurality of ports of the first reference signal as reference ports, and may determine one piece of auto correlation function information for each reference port. In this way, a plurality of pieces of auto correlation function information may be obtained in total. The first auto correlation function information included in the first information may directly include a plurality of auto correlation functions, or may be determined based on the plurality of pieces of auto correlation function information. For another example, the first apparatus may select a plurality of receive antenna ports of the first apparatus as reference ports, and may determine one piece of auto correlation function information for each reference port. In this way, a plurality of pieces of auto correlation function information may be obtained in total. The first auto correlation function information included in the first information may be determined based on the plurality of pieces of auto correlation function information. Alternatively, the foregoing operations are performed with reference to ports of a plurality of reference signals and a receive antenna port.

In addition to the foregoing parameters, the first information may further include another parameter corrected based on the first phase. This is not limited herein.

Optionally, the first apparatus may also report the first information to an apparatus other than the third apparatus and the first apparatus, in other words, the apparatus that receives the first information may be neither the apparatus that sends the first reference signal nor the apparatus that configures the first reference signal resource, but another apparatus. For example, when both the first apparatus and the second apparatus are terminal apparatuses, the third apparatus may be an access network apparatus, and the access network apparatus may configure a first reference signal resource for the first apparatus and the second apparatus. In addition, there is a fourth apparatus, the fourth apparatus may be a core network apparatus, and the fourth apparatus may receive a measurement result (for example, first information) from the first apparatus.

Optionally, after obtaining the first information, the third apparatus may sense an environment based on the first information, or determine environment information based on the first information, for example, determine whether a to-be-detected or to-be-sensed target object exists in the environment, distances between a scatterer and receiving and sending devices, orientations or angles (including horizontal directions or vertical directions) of the scatterer relative to the receiving and sending devices, moving speeds of the scatterer relative to the receiving and sending devices, and other information. An application manner of the first information is not limited in this embodiment of this application.

In this embodiment of this application, the measurement result of the first reference signal may be corrected based on the first phase. The first phase may be the phase of the first path. For example, the first phase can reflect phase deviations caused by device factors. The measurement result of the first reference signal is corrected based on the first phase, so that the phase deviation caused by the device factor in the measurement result of the first reference signal can be eliminated as much as possible. In this way, the first information obtained through the correction includes only environment information as far as possible, and does not include the phase deviation caused by the device factor. Therefore, the environment information determined based on the first information is accurate.

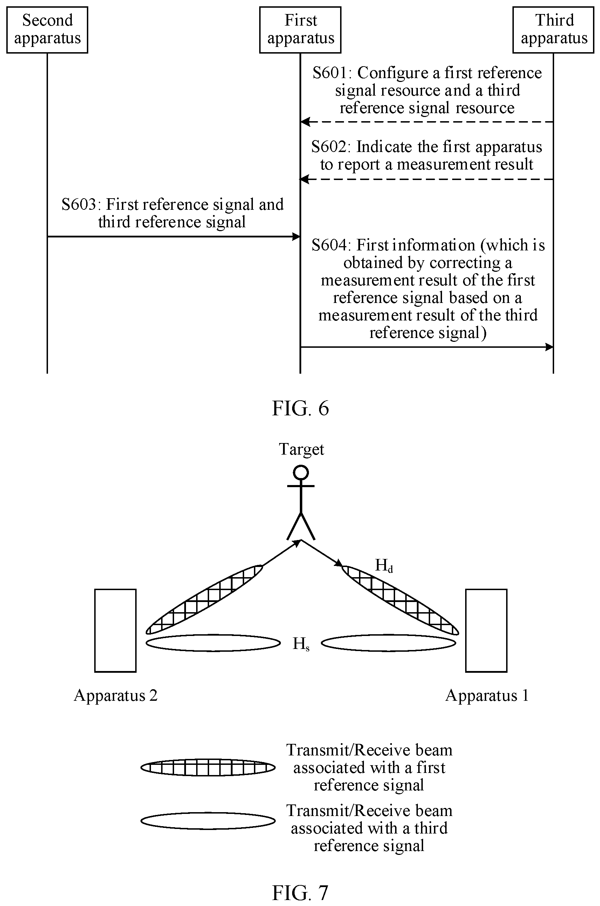

An embodiment of this application provides another information transmission method. FIG. 6 is a flowchart of the method.

S601: A third apparatus configures a first reference signal resource and a third reference signal resource for a first apparatus. For example, the third apparatus may send first configuration information to the first apparatus, where the first configuration information is used to configure the first reference signal resource and the third reference signal resource. A reference signal corresponding to the first reference signal resource is referred to as a first reference signal, and the reference signal corresponding to the first reference signal resource is, for example, a reference signal sent on the first reference signal resource. A reference signal corresponding to the third reference signal resource is referred to as a third reference signal, and the reference signal corresponding to the third reference signal resource is, for example, a reference signal sent on the third reference signal resource.

Optionally, the first reference signal resource and a second reference signal resource may also be understood as two different ports of a same reference signal resource. In this embodiment of this application, an example in which the first reference signal resource and the second reference signal resource are two reference signal resources is mainly used for description.

The third apparatus is, for example, a second apparatus, or a third-party apparatus other than the first apparatus and the second apparatus. For example, the third-party apparatus is an access network apparatus, or a network element or a server responsible for a sensing function in a core network; or may be an application server configured to process a sensing service.

If the third apparatus and the second apparatus are different apparatuses, optionally, the third apparatus may further configure the first reference signal resource and the third reference signal resource for the second apparatus. A configuration manner is similar to a manner of configuring the first reference signal resource and the third reference signal resource for the first apparatus.

Optionally, the first configuration information may further indicate the first apparatus to receive and measure the first reference signal, and indicate the first apparatus to receive and measure the third reference signal. For example, the first configuration information may include first request information, where the first request information indicates the first apparatus to receive and measure the first reference signal, and indicates the first apparatus to receive and measure the third reference signal. Alternatively, if the first reference signal resource is configured in the first configuration information, it may be considered that the first apparatus is implicitly indicated to receive and measure the first reference signal. If the third reference signal resource is configured in the first configuration information, it may be considered that the first apparatus is implicitly indicated to receive and measure the third reference signal. Therefore, the first configuration information indicates, without using additional information, the first apparatus to receive and measure the first reference signal and the third reference signal.

If the third apparatus further configures the first reference signal resource and the third reference signal resource for the second apparatus, the third apparatus may also indicate the second apparatus to send the first reference signal and the third reference signal. For example, the third apparatus configures the first reference signal resource and the third reference signal resource for the second apparatus by sending second configuration information to the second apparatus. For example, the second configuration information may include third request information, and the third request information indicates the second apparatus to send the first reference signal and the third reference signal. Alternatively, if the first reference signal resource and the third reference signal resource are configured in the second configuration information, it may be considered that the second apparatus is implicitly indicated to send the first reference signal and the third reference signal. Therefore, the second configuration information indicates, without using additional information, the second apparatus to send the first reference signal and the third reference signal.

For a distribution manner of the first reference signal resource in time domain, frequency domain, and the like, refer to the descriptions of the first reference signal resource in the embodiment shown in FIG. 2. For a distribution manner of the third reference signal resource in time domain, frequency domain, and the like, also refer to the descriptions of the first reference signal resource in the embodiment shown in FIG. 2.

Optionally, in this embodiment of this application, a first phase may be a phase determined based on a measurement result of the third reference signal.

In millimeter-wave or high-frequency communication, a transmit end and a receive end may communicate with each other in a beam-based manner, to improve a signal-to-noise ratio between receiving and sending devices. Similarly, a similar method may also be used to align a beam with a to-be-sensed target during sensing. As shown in FIG. 7, when the first reference signal is sent and received on the first reference signal resource, a transmit beam of the second apparatus and a receive beam of the first apparatus may be aligned with a target that needs to be sensed. In this way, a measurement result of the first apparatus may be less affected by noise and other interference. In a beam-based sensing scenario, there is also a problem that a measurement result is interfered by an additional phase deviation caused by device factors. In this embodiment of this application, the third reference signal may be used for phase correction. For example, when sending the third reference signal, the second apparatus may align a transmit beam with a reference path with a stable phase. For example, the reference path is a LoS path between the first apparatus and the second apparatus. When receiving the third reference signal, the first apparatus may also align a receive beam with the reference path, so that beam energy is concentrated on the reference path as much as possible, and the measurement result of the third reference signal may also mainly include information about the reference path. Therefore, the measured first phase is more accurate. Optionally, a phase of the reference path may be the first phase in this embodiment of this application. In this case, a function of the reference path may be equivalent to the first path in the embodiment shown in FIG. 2. The first path in the embodiment shown in FIG. 2 is related to the first reference signal. However, the reference path in this embodiment of this application is related to the third reference signal. In this embodiment of this application, the first apparatus may determine the first phase based on the third reference signal, and then correct a measurement result of the first reference signal based on the first phase, to improve accuracy of a corrected result. It can be learned that, a difference between this embodiment of this application and the embodiment shown in FIG. 2 lies in that in the embodiment shown in FIG. 2, the first phase is determined based on the first reference signal, but in this embodiment of this application, the first phase is determined based on another reference signal (the third reference signal).

Additional phase deviations caused by device impact may be different in different time subunits. Therefore, if the first phase needs to be determined based on the third reference signal, the first reference signal resource and the third reference signal resource may be configured in a same time subunit. Therefore, in this embodiment of this application, there may be an intersection between a time domain resource occupied by the first reference signal resource and a time domain resource occupied by the third reference signal resource. For example, a quantity of same time subunits occupied by the first reference signal resource and the third reference signal resource may be greater than or equal to 1. In a same time subunit occupied by the first reference signal resource and the second reference signal resource, the first reference signal resource and the second reference signal resource may occupy different subcarriers.

Optionally, the time domain resource occupied by the first reference signal resource and the time domain resource occupied by the third reference signal resource may completely overlap. On the time domain resource, the first reference signal resource and the third reference signal resource may occupy different subcarriers. For example, the subcarriers occupied by the two reference signal resources may be adjacent.

Optionally, the third apparatus may further send second indication information to the first apparatus, where the second indication information may indicate that the first reference signal resource is associated with the third reference signal resource. If the first apparatus determines that the first reference signal resource is associated with the second reference signal resource, the first apparatus may perform phase correction on the measurement result of the first reference signal based on the measurement result of the third reference signal, for example, perform phase correction on the measurement result of the first reference signal based on the first phase. Alternatively, the second indication information may not indicate that the first reference signal resource is associated with the third reference signal resource, but directly indicate to perform phase correction on the measurement result of the first reference signal based on the measurement result of the third reference signal (or indicate to perform phase correction on the measurement result of the third reference signal to obtain first information, or indicate that first information is obtained through phase correction based on the measurement result of the third reference signal). The second indication information may be carried in the first configuration information, or may be separately sent.

Optionally, the third apparatus may further send third indication information to the first apparatus. The third indication information may indicate one or more of the following: a transmit beam associated with the first reference signal resource, a receive beam associated with the first reference signal resource, a transmit beam associated with the third reference signal resource, or a receive beam associated with the third reference signal resource. For example, the third indication information may indicate the transmit beam associated with the first reference signal resource and the transmit beam associated with the third reference signal resource. The first apparatus may determine, based on the transmit beam associated with the first reference signal resource, the receive beam associated with the first reference signal resource, and may determine, based on the transmit beam associated with the third reference signal resource, the receive beam associated with the third reference signal resource. Alternatively, the third indication information may indicate the transmit beam associated with the first reference signal resource, and the transmit beam associated with the third reference signal resource may be pre-configured, and does not need to be indicated by the third indication information. The first apparatus may determine, based on the transmit beam associated with the first reference signal resource, the receive beam associated with the first reference signal resource, and may determine, based on the transmit beam associated with the third reference signal resource, the receive beam associated with the third reference signal resource.

A beam described in embodiments of this application may also be understood as a beamforming vector, a space-domain (or space, where the two terms are similar below) filter, a space-domain parameter, a space-domain filtering parameter, or the like. Therefore, a transmit beam may be understood as a transmit beamforming vector, a transmit space-domain filter, a transmit space-domain parameter, a transmit space-domain filtering parameter, or the like, and a receive beam may be understood as a receive beamforming vector, a receive space-domain filter, a receive space-domain parameter, a receive space-domain filtering parameter, or the like. Beam information may include one or more of the following: a beam identifier, a beam direction, a beam width, a specific beamforming vector, or a type-D quasi co-location (quasi co-location, QCL) source. Type-D quasi co-location is usually used to describe a case in which a receive end may use a same receive beam or similar receive beams to perform receiving on two reference signal resources (or two channels, or one reference signal resource and one channel). In this embodiment of this application, different transmit beams and/or different receive beams may be configured for the first reference signal resource and the third reference signal resource. Optionally, a beam used to send the third reference signal and a beam used to receive the third reference signal may be aligned with a reference path (the reference path is, for example, the first path in the embodiment shown in FIG. 2, or the LoS path between the first apparatus and the second apparatus), and the beam is a narrow beam or a wide beam. When the narrow beam is used, energy concentration is facilitated, and accuracy of the measured first phase can be improved. A transmit beam used to send the first reference signal and a receive beam used to receive the first reference signal may be aligned with a target that needs to be sensed. The beam may be a wide beam or a narrow beam, but usually needs to cover the to-be-sensed target. Therefore, a type-D quasi co-location source of the first reference signal resource may be different from a type-D QCL source of the third reference signal resource. The third indication information may be carried in the first configuration information, or may be separately sent.

Optionally, receive and transmit beams (namely, beams corresponding to a to-be-sensed target) that need to be used to receive and send the first reference signal and receive and transmit beams (namely, beams corresponding to a reference path) that need be used to receive and send the third reference signal may be determined through beam training between the first apparatus and the second apparatus. Optionally, the first apparatus and/or the second apparatus may report a beam training result to the third apparatus; or after the third apparatus determines beam training results, the third apparatus determines specific beam configuration information of the first reference signal resource and the third reference signal resource based on the results, including the beam information in the first configuration information, and configuring the first configuration information for the first apparatus and the second apparatus.

S602: The third apparatus indicates the first apparatus to report a measurement result. For example, the third apparatus sends second request information to the first apparatus, where the second request information may indicate to report the measurement result.

Optionally, the second request information may indicate that the to-be-reported measurement result is corrected based on the first phase. In this embodiment of this application, the first phase is a phase determined based on the measurement result of the third reference signal.

For more content of S602, refer to S202 in the embodiment shown in FIG. 2.

S603: The second apparatus sends the first reference signal and the third reference signal. Correspondingly, the first apparatus receives the first reference signal and the third reference signal.

The second apparatus may send the first reference signal on the first reference signal resource, and the first apparatus may also receive the first reference signal on the first reference signal resource. The second apparatus may send the third reference signal on the third reference signal resource, and the first apparatus may also receive the third reference signal on the third reference signal resource. Optionally, the first apparatus and the second apparatus may receive and send the first reference signal and the third reference signal based on the receive and transmit beams configured in S601. Optionally, the second apparatus may send the first reference signal and the third reference signal based on the beam configuration information in S601. Optionally, the first apparatus may receive the first reference signal and the third reference signal based on the beam configuration information in S601.

S604: The first apparatus sends the first information to the third apparatus. Correspondingly, the third apparatus receives the first information from the first apparatus.

In this embodiment of this application, the first information may be obtained by correcting the measurement result of the first reference signal based on the first phase. Different from the embodiment shown in FIG. 2, the first phase in this embodiment of this application is determined based on the third reference signal, for example, is determined based on the measurement result of the third reference signal. Therefore, it may also be considered that the first information is obtained by correcting the measurement result of the first reference signal based on the measurement result of the third reference signal.

The third reference signal resource may occupy one or more time subunits, and the first apparatus may determine the first phase for each time subunit. For example, for a time subunit n occupied by the third reference signal resource, the first phase determined by the first apparatus is *θₙ*. It may be understood that the first phase is introduced as a phase reference in this embodiment of this application. For example, the first phase is a phase of a reference path between the first apparatus and the second apparatus (for descriptions of the reference path, refer to the foregoing descriptions). When the reference path is stationary, the phase of the reference path also remains constant. However, due to device factors, a phase actually measured by the first apparatus changes. Therefore, the first phase also reflects a phase change caused by the device factor, and the measurement result of the first reference signal is corrected based on the first phase, so that impact of the device factor on the measurement result can be eliminated as much as possible, to improve sensing accuracy.

Optionally, for any time subunit, the first phase is, for example, a phase determined based on a channel coefficient measured after the third reference signal is received. For example, the first phase is the phase corresponding to the channel coefficient measured after the third reference signal is received. For example, for any time subunit, the first phase is, for example, a phase of a channel coefficient measured after the third reference signal is received. The third reference signal resource may occupy a plurality of subcarriers. After receiving the third reference signal, the first apparatus may measure a channel coefficient on each subcarrier occupied by the third reference signal resource. In this case, the first phase may be determined based on phases of the channel coefficients that are on all the subcarriers and that are measured after the third reference signal.

Alternatively, for any time subunit, the first phase is, for example, a phase determined based on a channel coefficient that is on a reference subcarrier and measured after the third reference signal is received. For example, the first phase is the phase corresponding to the channel coefficient that is on the reference subcarrier and that is measured after the third reference signal is received. For example, for any time subunit, the first phase is, for example, a phase of a channel coefficient that is on a reference subcarrier and measured after the third reference signal is received. In this implementation, the first phase may be associated with the reference subcarrier. The reference subcarrier is, for example, one of the subcarriers occupied by the third reference signal resource, one subcarrier in a resource pool in which the third reference signal resource is located, one subcarrier in a BWP in which the third reference signal resource is located, one subcarrier at a frequency layer at which the third reference signal resource is located, or a subcarrier whose center frequency is 0. When the reference subcarrier is one of the subcarriers occupied by the third reference signal resource, for example, the reference subcarrier is a subcarrier that is with a lowest or highest frequency and that is occupied by the third reference signal resource, or a central subcarrier occupied by the third reference signal resource; or may be any subcarrier occupied by the third reference signal resource.

Alternatively, for any time subunit, the first phase is, for example, a phase determined based on a channel coefficient measured after the third reference signal is received via a reference antenna port and/or a first reference signal port. For example, the first phase is the phase corresponding to the channel coefficient measured after the third reference signal is received via the reference antenna port and/or the first reference signal port. For example, for any time subunit, the first phase is, for example, a phase corresponding to a channel coefficient measured after the third reference signal is received via a reference antenna port and/or a first reference signal port. In this implementation, the first phase may be associated with the reference antenna port and/or the first reference signal port. For more descriptions, refer to similar content of S204 in the embodiment shown in FIG. 2.

Alternatively, for any time subunit, the first phase is, for example, a phase determined based on a channel coefficient that is on a reference subcarrier and measured after the third reference signal is received via a reference antenna port and/or a first reference signal port. For example, the first phase is the phase corresponding to the channel coefficient that is on the reference subcarrier and that is measured after the third reference signal is received via the reference antenna port and/or the first reference signal port. For example, for any time subunit, the first phase is, for example, a phase corresponding to a channel coefficient that is on a reference subcarrier and measured after the third reference signal is received via a reference path and a reference antenna port and/or a first reference signal port. In this implementation, the first phase may be associated with the reference subcarrier, and associated with the reference antenna port and/or the first reference signal port.

Optionally, in the foregoing manner, the reference frequency unit, the first reference signal port, and the reference antenna port (including a transmit antenna port and/or a receive antenna port) may be predefined or pre-configured, or may be determined based on specific configuration information. For example, the first configuration information indicates one or more of the specific reference frequency unit, the first reference signal port, or the reference antenna port. For more descriptions, refer to similar content of S204 in the embodiment shown in FIG. 2.

Optionally, when the first apparatus has a plurality of reference antenna ports or reference signal ports, the first apparatus may determine one first phase for each reference antenna port or reference signal port corresponding to one time subunit. For example, for a time subunit n, the first apparatus may determine that the first phase on a reference antenna port p is *θ*_{*n*,*p*}.

For more content of S604, for example, a phase correction manner and content included in the first information, refer to S204 in the embodiment shown in FIG. 2.

Optionally, after obtaining the first information, the third apparatus may sense an environment based on the first information, or determine environment information based on the first information, for example, determine whether a to-be-detected or to-be-sensed target object exists in the environment, distances between a scatterer and receiving and sending devices, orientations or angles (including horizontal directions or vertical directions) of the scatterer relative to the receiving and sending devices, moving speeds of the scatterer relative to the receiving and sending devices, and other information. An application manner of the first information is not limited in this embodiment of this application.

In this embodiment of this application, the measurement result of the first reference signal may be corrected based on the first phase. The first phase may be a phase determined based on the third reference signal. For example, the first phase can reflect phase deviations caused by device factors. The measurement result of the first reference signal is corrected based on the first phase, so that the phase deviation caused by the device factor in the measurement result of the first reference signal can be eliminated as much as possible. In this way, the first information obtained through the correction includes only environment information as far as possible, and does not include the phase deviation caused by the device factor. Therefore, the environment information determined based on the first information is accurate. In addition, in this embodiment of this application, the signal received by the first apparatus on the third reference signal resource is mainly a signal transmitted via a LoS path, so that the first phase determined by the first apparatus is more accurate, and accuracy of a sensing result is further improved.

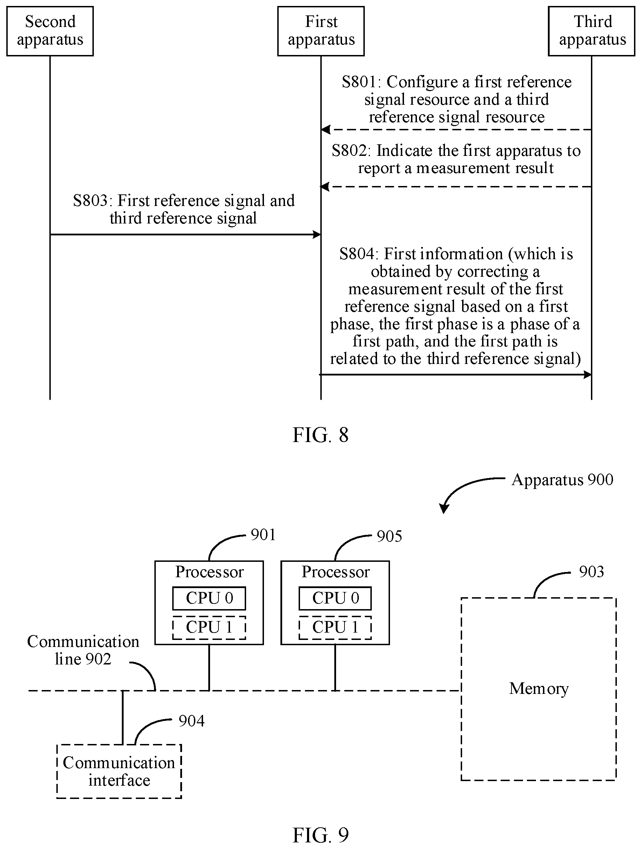

An embodiment of this application provides still another information transmission method. FIG. 8 is a flowchart of the method.

In this embodiment of this application, a third reference signal may be used for phase correction. For example, the first apparatus may determine a first path based on the third reference signal, determine a phase (referred to as a first phase) of the first path, and then correct a measurement result of a first reference signal based on the first phase. It is equivalent to that, a difference between this embodiment of this application and the embodiment shown in FIG. 2 lies in that in the embodiment shown in FIG. 2, the first path is determined based on the first reference signal, but in this embodiment of this application, the first path is determined based on another reference signal (the third reference signal). A difference between this embodiment of this application and the embodiment shown in FIG. 6 lies in that in the embodiment shown in FIG. 6, the first phase is determined based on the third reference signal, but in this embodiment of this application, the phase of the first path is determined based on the third reference signal.

S801: A third apparatus configures a first reference signal resource and a third reference signal resource for the first apparatus. For more content of S801, for example, related content of the first reference signal resource and/or the third reference signal resource, a sending manner of the third reference signal, and a relationship between the third reference signal and the first reference signal, refer to S601 in the embodiment shown in FIG. 6.

S802: The third apparatus indicates the first apparatus to report a measurement result. For example, the third apparatus sends second request information to the first apparatus, where the second request information may indicate to report the measurement result.

Optionally, the second request information indicates that a reported parameter is corrected based on the first phase. In this embodiment of this application, the first phase is the phase that is of the first path and that is determined based on a measurement result of the third reference signal, in other words, in this embodiment of this application, the first path is determined based on the measurement result of the third reference signal instead of the measurement result of the first reference signal.

For more content of S802, refer to S202 in the embodiment shown in FIG. 2.

S803: A second apparatus sends the first reference signal and the third reference signal. Correspondingly, the first apparatus receives the first reference signal and the third reference signal.

The second apparatus may send the first reference signal on the first reference signal resource, and the first apparatus may also receive the first reference signal on the first reference signal resource. The second apparatus may send the third reference signal on the third reference signal resource, and the first apparatus may also receive the third reference signal on the third reference signal resource. Optionally, the first apparatus and the second apparatus may receive and send the first reference signal and the third reference signal based on receive and transmit beams configured in S801.

S804: The first apparatus sends first information to the third apparatus. Correspondingly, the third apparatus receives the first information from the first apparatus.

In this embodiment of this application, the first information may be obtained by correcting the measurement result of the first reference signal based on the first phase. Different from the embodiment shown in FIG. 2, the first phase in this embodiment of this application is determined based on the first path, and the first path may be related to the third reference signal. For example, the first path is determined based on the measurement result of the third reference signal. Therefore, it may also be considered that the first information is obtained by correcting the measurement result of the first reference signal based on the measurement result of the third reference signal.

In this embodiment of this application, the first path is related to the third reference signal. Optionally, the first apparatus may determine the first path and/or the first phase based on the measurement result of the third reference signal; or the first apparatus may determine the first path and/or the first phase based on first indication information from the third apparatus. For content such as a manner in which the first apparatus determines the first path and/or the first phase, refer to S204 in the embodiment shown in FIG. 2. In addition, if the first apparatus determines the first path and/or the first phase based on the first indication information, for a manner of determining the first path and/or the first phase in this embodiment of this application, refer to S205 to S207 in the embodiment shown in FIG. 2.

Optionally, the first path is, for example, a LoS path between the first apparatus and the second apparatus. It is equivalent to that although the third reference signal is sent as concentrated as possible on the LoS path, energy may still leak to another path. In this embodiment of this application, to make a selected reference path (the first path) more accurate, the first path corresponding to the third reference signal may be further determined, so that the first path can be selected more accurately, to improve accuracy of a corrected result.

For content such as the first phase and correcting the measurement result based on the first phase to obtain the first information, refer to S604 in the embodiment shown in FIG. 6. In addition, for more content of S804, for example, a phase correction manner and content included in the first information, refer to S204 in the embodiment shown in FIG. 2.

Optionally, after obtaining the first information, the third apparatus may sense an environment based on the first information, or determine environment information based on the first information, for example, determine whether a to-be-detected or to-be-sensed target object exists in the environment, distances between a scatterer and receiving and sending devices, orientations or angles (including horizontal directions or vertical directions) of the scatterer relative to the receiving and sending devices, moving speeds of the scatterer relative to the receiving and sending devices, and other information. An application manner of the first information is not limited in this embodiment of this application.

In this embodiment of this application, the measurement result of the first reference signal may be corrected based on the first phase. The first phase may be the phase of the first path, and the first path may be determined based on the third reference signal. For example, the first phase can reflect phase deviations caused by device factors. The measurement result of the first reference signal is corrected based on the first phase, so that the phase deviation caused by the device factor in the measurement result of the first reference signal can be eliminated as much as possible. In this way, the first information obtained through the correction includes only environment information as far as possible, and does not include the phase deviation caused by the device factor. Therefore, the environment information determined based on the first information is accurate. In addition, the first apparatus in this embodiment of this application may determine the first path based on the third reference signal, so that the first path determined by the first apparatus is more accurate, and accuracy of a sensing result is further improved.

Optionally, the foregoing three embodiments shown in FIG. 2, FIG. 6, and FIG. 8 may be separately applied and are not combined with each other; or any two or three of the three embodiments may be combined for application.

An example in which the embodiment shown in FIG. 2 and the embodiment shown in FIG. 6 are combined for application is used. In this case, the third apparatus may configure a third reference signal resource for the first apparatus, and also configure a second reference signal resource for the first apparatus; the third apparatus may configure a third reference signal resource for the first apparatus, and also send first indication information to the first apparatus; or the third apparatus may configure a third reference signal resource for the first apparatus, and the first apparatus may also determine a first path based on a measurement result of a first reference signal. That is, for the first apparatus, there may be a plurality of manners that can be used to determine the first phase. The first apparatus may determine the first phase in any one of the manners, for example, determine the first phase based on the first indication information (refer to S207 in the embodiment shown in FIG. 2), or determine the first phase based on a third reference signal (refer to the embodiment shown in FIG. 6). Alternatively, because the first phase determined based on the third reference signal may be more accurate, the first apparatus may preferentially determine the first phase based on the third reference signal.

Another example in which the embodiment shown in FIG. 2 and the embodiment shown in FIG. 8 are combined for application is used. In this case, the third apparatus may configure a third reference signal resource for the first apparatus, and also configure a second reference signal resource for the first apparatus; the third apparatus may configure a third reference signal resource for the first apparatus, and also send first indication information to the first apparatus; or the third apparatus may configure a third reference signal resource for the first apparatus, and the first apparatus may also determine a first path based on a measurement result of a first reference signal. That is, for the first apparatus, there may be a plurality of manners that can be used to determine the first path. In this case, the first apparatus may determine the first path in any one of the manners, for example, determine the first path based on the first indication information (refer to S207 in the embodiment shown in FIG. 2), or determine the first path based on a third reference signal (refer to the embodiment shown in FIG. 6). Alternatively, because the first path determined based on the third reference signal may be more accurate, the first apparatus may preferentially determine the first path based on the third reference signal.

FIG. 9 is a diagram of a structure of an apparatus according to an embodiment of this application. The apparatus 900 may be a circuit system of the first apparatus according to the embodiment shown in any one or more of FIG. 2, FIG. 6, or FIG. 8, and is configured to implement the method corresponding to the first apparatus in the foregoing method embodiments. Alternatively, the apparatus 900 may be a circuit system of the third apparatus according to the embodiment shown in any one or more of FIG. 2, FIG. 6, or FIG. 8, and is configured to implement the method corresponding to the third apparatus in the foregoing method embodiments. Alternatively, the apparatus 900 may be a circuit system of the second apparatus according to the embodiment shown in any one or more of FIG. 2, FIG. 6, or FIG. 8, and is configured to implement the method corresponding to the second apparatus in the foregoing method embodiments. For example, a circuit system is a chip system.

The apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent devices, may be located at different physical positions, or may be located on different integrated circuits. Optionally, different processors may be integrated into one or more processors, for example, integrated into one or more integrated circuits.

Optionally, the apparatus 900 includes one or more memories 903, configured to store instructions. Optionally, the memory 903 may further store data. The processor and the memory may be separately disposed, or may be integrated together.

Optionally, the apparatus 900 includes a communication line 902 and at least one communication interface 904. The memory 903, the communication line 902, and the communication interface 904 are all optional, and therefore are all represented by dashed lines in FIG. 9.

Optionally, the apparatus 900 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the apparatus 900 via an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 901 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 902 may include a path for transmitting information between the foregoing components.

The communication interface 904 uses any transceiver-type apparatus, to communicate with another device or a communication network such as the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, or a random access memory (random access memory, RAM) or another type of dynamic storage device that can store information and instructions. The memory 903 may alternatively be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used for carrying or storing expected program code in a form of instructions or a data structure and that is accessible by a computer, but is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the processor 901 controls execution. The processor 901 is configured to execute the computer-executable instructions stored in the memory 903, to implement the steps performed by the first apparatus, the second apparatus, or the third apparatus in the embodiment shown in any one or more of FIG. 2, FIG. 6, or FIG. 8.

Optionally, the computer-executable instructions in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the apparatus 900 may include a plurality of processors, for example, the processor 901 and a processor 905 shown in the FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, the first apparatus is the chip, the second apparatus is the chip, or the third apparatus is the chip; or the chip is a chip in the first apparatus, a chip in the second apparatus, or a chip in the third apparatus, the chip includes the processor 901 (and may further include the processor 905), the communication line 902, and the communication interface 904. Optionally, the chip may include the memory 903. Specifically, the communication interface 904 may be an input interface, a pin, a circuit, or the like. The memory 903 may be a register, a cache, or the like. The processor 901 and the processor 905 each may be a general-purpose CPU, a microprocessor, an ASIC, or one or more integrated circuits configured to control program execution of the information transmission method in any one of the foregoing embodiments.

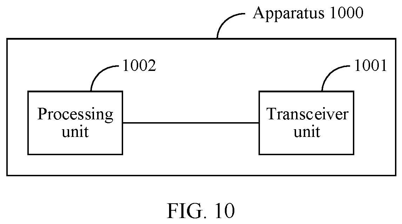

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used. For example, when each functional module is obtained through division based on each corresponding function, FIG. 10 is a diagram of an apparatus. The apparatus 900 may be the first apparatus, the second apparatus, or the third apparatus in the foregoing method embodiments, or a chip in the first apparatus, a chip in the second apparatus, or a chip in the third apparatus. The apparatus 900 includes a processing unit 1002 and a transceiver unit 1001.

It should be understood that the apparatus 900 may be configured to implement the steps performed by the first apparatus, the second apparatus, or the third apparatus in the information transmission method in embodiments of this application. For related features, refer to the embodiment shown in any one or more of FIG. 2, FIG. 6, or FIG. 8. Details are not described herein again.

Optionally, functions/implementation processes of the transceiver unit 1001 and the processing unit 1002 in FIG. 10 may be implemented by the processor 901 in FIG. 9 by invoking the computer-executable instructions stored in the memory 903. Alternatively, functions/implementation processes of the processing unit 1002 in FIG. 10 may be implemented by the processor 901 in FIG. 9 by invoking the computer-executable instructions stored in the memory 903, and functions/implementation processes of the transceiver unit 1001 in FIG. 10 may be implemented by the communication interface 904 in FIG. 9.

Optionally, when the apparatus 900 is a chip or a circuit, the functions/implementation processes of the transceiver unit 1001 may alternatively be implemented by using a pin, a circuit, or the like. Optionally, the transceiver unit 1001 may include a sending unit and/or a receiving unit. The sending unit is configured to implement a sending function, and the receiving unit is configured to implement a receiving function. Alternatively, the transceiver unit 1001 may be an entire module that can implement a sending function and/or a receiving function. Optionally, the transceiver unit 1001 may be implemented by using a transceiver.

This application further provides a computer-readable storage medium. The computer-readable storage medium stores a computer program or instructions. When the computer program or the instructions are run, the method performed by the first apparatus, the second apparatus, or the third apparatus in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the first apparatus, the second apparatus, or the third apparatus in any one of the foregoing method embodiments.

An embodiment of this application further provides a processing apparatus, including a processor and an interface. The processor is configured to perform the method performed by the first apparatus, the second apparatus, or the third apparatus in any one of the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by using a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to the processor, so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different components of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or logical conflict occurs, terms and/or descriptions in different embodiments are consistent and may be mutually referenced, and technical features in different embodiments may be combined into a new embodiment based on an internal logical relationship thereof.

It may be understood that, in embodiments of this application, the first apparatus, and/or the second apparatus, and/or the third apparatus may perform some or all steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

## Claims

1. An information transmission method, applied to a first apparatus, wherein the method comprises:
receiving a first reference signal from a second apparatus; and
sending first information, wherein the first information is obtained by correcting a measurement result of the first reference signal based on a first phase, the first phase is a phase determined based on a first path and the measurement result of the first reference signal, or the first phase is a phase determined based on a measurement result of a third reference signal, the first path is one of one or more paths between the first apparatus and the second apparatus, and the third reference signal is a reference signal used for phase correction.

2. The method according to claim 1, wherein the first information comprises one or more of the following:
a first channel coefficient;
phase information of the one or more paths;
Doppler frequency information of the one or more paths;
first Doppler spectrum information; or
first auto correlation function information.

3. The method according to claim 2, wherein the method further comprises:
determining, based on the measurement result of the first reference signal in a time subunit n, that an initial channel coefficient is ***H**ₙ* and the first phase is *θₙ*; and
determining that the first channel coefficient is ***H**'ₙ* = ***H**ₙe*⁻*^{jθₙ}.*

4. The method according to claim 2, wherein the phase information of the one or more paths indicates:
a phase difference between an initial phase of each of the one or more paths and the first phase.

5. The method according to any one of claims 1 to 4, wherein the first phase is a phase determined based on the first path, wherein
the first phase is a phase determined based on a channel coefficient measured after the first reference signal is received via the first path;
the first phase is a phase determined based on a channel coefficient that is on a reference frequency unit and measured after the first reference signal is received via the first path;
the first phase is a phase determined based on a channel coefficient measured after the first reference signal is received via the first path and via a reference antenna port and/or a first reference signal port; or
the first phase is a phase determined based on a channel coefficient that is on a reference frequency unit and measured after the first reference signal is received via the first path and via a reference antenna port and/or a first reference signal port.

6. The method according to any one of claims 1 to 5, wherein
the first path is a path with a smallest delay among the one or more paths.

7. The method according to any one of claims 1 to 6, wherein the first path is a line of sight LoS path between the first apparatus and the second apparatus.

8. The method according to any one of claims 1 to 5, wherein the method further comprises:
receiving first indication information, wherein
the first indication information comprises one or more of the following:
first delay information, wherein the first delay information indicates a delay of the first path;
an index of the first path; or
first precoding vector information or first precoding matrix information, wherein the first precoding vector information or the first precoding matrix information corresponds to the first path.

9. The method according to claim 8, wherein before receiving the first indication information, the method further comprises:
receiving a second reference signal from the second apparatus; and
sending a first measurement result, wherein the first measurement result is a measurement result of the second reference signal, and the first measurement result comprises one or more of the following:
at least one second channel coefficient;
at least one first delay power spectrum;
at least one first precoding matrix indicator PMI; or
path information of N paths, wherein the N paths are all or a part of the paths between the first apparatus and the second apparatus, and N is a positive integer.

10. The method according to claim 9, wherein the N paths comprise a second path, and path information of the second path comprises one or more of the following:
an index of the second path;
an identifier of the second path;
delay information corresponding to the second path;
angle of arrival AoA information of the second path;
angle of departure AoD information of the second path; or
LoS path information of the second path, wherein the LoS path information of the second path indicates whether the second path is a LoS path and/or indicates a probability that the second path is a LoS path.

11. The method according to any one of claims 1 to 4, wherein the method further comprises:
receiving the third reference signal from the second apparatus, wherein there is an intersection between time domain resources occupied by the first reference signal and the third reference signal.

12. The method according to claims 1 to 4 or claim 11, wherein the method further comprises:
receiving the third reference signal from the second apparatus, wherein the time domain resources occupied by the first reference signal and the third reference signal completely overlap.

13. The method according to claims 1 to 4, claim 11, or claim 12, wherein a type-D quasi co-location QCL source of a resource for transmitting the first reference signal is different from a type-D quasi co-location QCL source of a resource for transmitting the third reference signal.

14. The method according to any one of claims 1 to 4 or 11 to 13, wherein the method further comprises:
receiving second indication information, wherein the second indication information indicates that the resource for transmitting the first reference signal is associated with the resource for transmitting the third reference signal, or indicates that the first information is obtained by performing phase correction based on the measurement result of the third reference signal.

15. The method according to claim 14, wherein that the resource for transmitting the first reference signal is associated with the resource for transmitting the third reference signal comprises:
the first information is obtained by performing phase correction based on the measurement result of the third reference signal.

16. The method according to any one of claims 1 to 4 or 11 to 15, wherein the method further comprises:
receiving third indication information, wherein the third indication information indicates one or more of the following:
a transmit beam associated with the first reference signal resource;
a receive beam associated with the first reference signal resource;
a transmit beam associated with the third reference signal resource; or
a receive beam associated with the third reference signal resource.

17. The method according to any one of claims 1 to 4 or 11 to 16, wherein the first phase is the phase determined based on the measurement result of the third reference signal, wherein
the first phase is a phase determined based on a channel coefficient measured after the third reference signal is received;
the first phase is a phase determined based on a channel coefficient that is on a reference frequency unit and measured after the third reference signal is received;
the first phase is a phase determined based on a channel coefficient measured after the third reference signal is received via a reference antenna port and/or a first reference signal port; or
the first phase is a phase determined based on a channel coefficient that is on a reference frequency unit and measured after the third reference signal is received via a reference antenna port and/or a first reference signal port.

18. An information transmission method, wherein the method comprises:
sending first request information to a first apparatus, wherein the first request information indicates the first apparatus to receive and measure a first reference signal, and indicates the second apparatus to report first information, wherein the first information is obtained by correcting a measurement result of the first reference signal based on a first phase, the first phase is a phase determined based on a first path and the measurement result of the first reference signal, or the first phase is a phase determined based on a measurement result of a third reference signal, the first path is one of one or more paths between the first apparatus and the second apparatus, and the third reference signal is a reference signal used for phase correction.

19. The method according to claim 18, wherein the first information comprises one or more of the following:
a first channel coefficient;
phase information of the one or more paths;
Doppler frequency information of the one or more paths;
first Doppler spectrum information; or
first auto correlation function information.

20. The method according to claim 18 or 19, wherein
the first path is a path with a smallest delay among the one or more paths.

21. The method according to any one of claims 18 to 20, wherein the first path is a LoS path between the first apparatus and the second apparatus.

22. The method according to any one of claims 18 to 21, wherein the method further comprises:
sending first indication information to the first apparatus, wherein the first indication information comprises one or more of the following:
first delay information, wherein the first delay information indicates a delay of the first path;
an index of the first path; or
first precoding vector information or first precoding matrix information, wherein the first precoding vector information or the first precoding matrix information corresponds to the first path.

23. The method according to claim 22, wherein the method further comprises:
sending a second reference signal to the first apparatus; and
receiving a first measurement result from the first apparatus, wherein the first measurement result is a measurement result of the second reference signal, and the first measurement result comprises one or more of the following:
at least one second channel coefficient;
at least one first delay power spectrum;
at least one first PMI; or
path information of N paths, wherein the N paths are all or a part of the paths between the first apparatus and the second apparatus, and N is a positive integer.

24. The method according to claim 23, wherein the N paths comprise a second path, and path information of the second path comprises one or more of the following:
an index of the second path;
an identifier of the second path;
delay information corresponding to the second path;
AoA information of the second path;
angle of departure AoD information of the second path; or
LoS path information of the second path, wherein the LoS path information of the second path indicates whether the second path is a LoS path and/or indicates a probability that the second path is a LoS path.

25. The method according to claim 18 or 19, wherein there is an intersection between time domain resources occupied by the first reference signal and the third reference signal.

26. The method according to claim 25, wherein the time domain resources occupied by the first reference signal and the third reference signal completely overlap.

27. The method according to claim 18, 19, 25, or 26, wherein a type-D quasi co-location QCL source of a resource for transmitting the first reference signal is different from a type-D quasi co-location QCL source of a resource for transmitting the third reference signal.

28. The method according to any one of claim 18, claim 19, or claims 25 to 27, wherein the method further comprises:
sending second indication information to the first apparatus, wherein the second indication information indicates that the resource for transmitting the first reference signal is associated with the resource for transmitting the third reference signal, or indicates that the first information is obtained by performing phase correction based on the measurement result of the third reference signal.

29. The method according to claim 18, 19, or 28, wherein that the resource for transmitting the first reference signal is associated with the resource for transmitting the third reference signal comprises:
the first information is obtained by performing phase correction based on the measurement result of the third reference signal.

30. The method according to any one of claim 18, claim 19, or claims 25 to 28, wherein the method further comprises:
sending third indication information to the first apparatus, wherein the third indication information indicates one or more of the following:
a transmit beam associated with the first reference signal resource;
a receive beam associated with the first reference signal resource;
a transmit beam associated with the third reference signal resource; or
a receive beam associated with the third reference signal resource.

31. The method according to any one of claims 18 to 30, wherein the method further comprises:
sending third request information to the second apparatus, wherein the third request information indicates the second apparatus to send the first reference signal.

32. An apparatus, wherein the apparatus comprises a processing unit and a transceiver unit, and the processing unit is coupled to the transceiver unit, to perform the method according to any one of claims 1 to 17, or perform the method according to any one of claims 18 to 31.

33. An apparatus, wherein the apparatus comprises a processor and a memory, the memory is configured to store a computer program, and the processor is configured to execute the computer program stored in the memory, to cause the apparatus to perform the method according to any one of claims 1 to 17, or cause the apparatus to perform the method according to any one of claims 18 to 31.

34. A computer-readable storage medium, wherein the computer-readable storage medium is configured to store a computer program; and when the computer program is run on a computer, the computer is caused to perform the method according to any one of claims 1 to 17, or the computer is caused to perform the method according to any one of claims 18 to 31.

35. A computer program product, wherein the computer program product comprises a computer program; and when the computer program is run on a computer, the computer is caused to perform the method according to any one of claims 1 to 17, or the computer is caused to perform the method according to any one of claims 18 to 31.

36. A chip system, wherein the chip system comprises:
a processor and an interface, wherein the processor is configured to invoke instructions from the interface and run the instructions; and when the processor executes the instructions, the method according to any one of claims 1 to 17 is implemented, or the method according to any one of claims 18 to 31 is implemented.

37. A system, comprising a first apparatus and a third apparatus, wherein
the first apparatus is configured to perform the method according to any one of claims 1 to 17; and
the third apparatus is configured to perform the method according to any one of claims 18 to 31.
